# EUROPÄISCHE PATENTSCHRIFT

(11) **EP 2 435 503 B1**
(45) Veröffentlichungstag und Bekanntmachung des Hinweises auf die Patenterteilung: **27.03.2013**
(21) Anmeldenummer: 10719302.1
(22) Anmeldetag: 26.04.2010
(51) Int. Cl.: C08G 77/46, C08L 101/10, C09J 101/10, C08L 83/12

(54) **EMULSIONEN AUF BASIS SILYLGRUPPEN TRAGENDER HYDROXYLVERBINDUNGEN**
CURABLE SILYL-GROUP CONTAINING COMPOSITIONS AND ITS USE
COMPOSITIONS CONTENANT DES GROUPEMENTS SILYL ET LEUR EMPLOI

(30) Priorität: 25.05.2009 DE 102009022630
(43) Veröffentlichungstag der Anmeldung: 04.04.2012
(73) Patentinhaber: Evonik Goldschmidt GmbH, 45127 Essen (DE)
(72) Erfinder: DE GANS, Berend-Jan, 45478 Mülheim an der Ruhr (DE); SCHUBERT, Frank, 47506 Neukirchen-Vluyn (DE); NAUMANN, Matthias, Greensboro North Carolina 27407 (US); KNOTT, Wilfried, 45355 Essen (DE); SILBER, Stefan, 47804 Krefeld (DE)
(86) Internationale Anmeldenummer: PCT/EP2010/055495
(87) Internationale Veröffentlichungsnummer: WO 2010/136279

(56) Entgegenhaltungen:
- EP-A1- 1 533 333
- EP-A1- 1 892 327

## Beschreibung

Die Erfindung betrifft Silylgruppen tragende Hydroxylverbindungen enthaltende Emulsionen, deren Herstellung und Verwendung.

Als Silylgruppen tragende Hydroxylverbindungen, die im Sinne dieser Erfindung Verwendung finden, werden alle Reaktionprodukte verstanden, die durch Alkoxylierung von epoxyfunktionellen Silanen an Doppelmetallcyanid-Katalysatoren gemäß dem in der noch nicht vorveröffentlichten Schrift DE 10 2008 000360.3 beschriebenen Verfahren hergestellt werden können; insbesondere können diese Verbindungen auch Siloxangruppen tragen. Diese Produkte werden im Weiteren als Silylpolyether der Formel 1 bezeichnet. Eine Silylgruppe im Rahmen dieser Erfindung ist durch unterschiedliche oder gleiche organische oder oxyorganische Reste gekennzeichnet

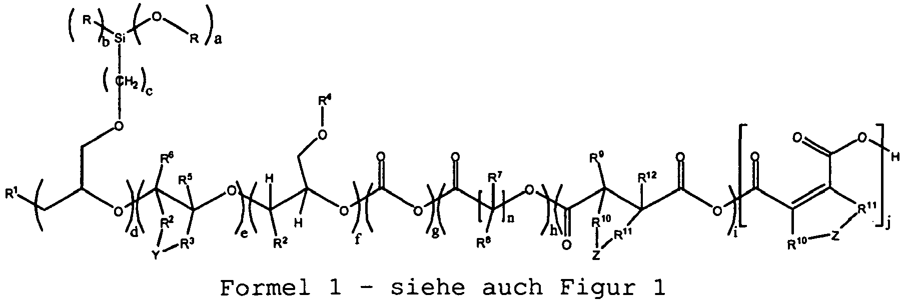

Präpolymersysteme, die über - endständige - reaktive Alkoxysilylgruppen verfügen, beispielsweise Alkoxysilanterminierte, feuchtigkeitshärtende Einkomponenten-Polyurethane, werden vielfach zur Herstellung von Beschichtungen sowie elastischen Dicht- und Klebstoffen im Industrie- und Baubereich und in der Automobilindustrie verwendet. Kommerziell verfügbare Beispiele von solchen Präpolymeren sind die MS Polymere der Firma Kaneka, oder die Geniosile der Firma Wacker. So sind alkoxysilanfunktionelle Polyurethane, die über eine Silanpolykondensation vernetzen, lange bekannt. Ein Übersichtsartikel zu dieser Thematik findet sich z.B. in "Adhesives Age" 4/1995, Seite 30 ff. (Autoren: Ta-Min Feng, B. A. Waldmann).

Solche endständig alkoxysilanfunktionalisierten Polyurethane können gemäß US 3,627,722 oder US 3,632,557 hergestellt werden, indem z.B. Polyetherpolyole mit einem Überschuss Polyisocyanat zu einem NCO-haltigen Präpolymer umgesetzt werden, das dann wiederum mit einem aminofunktionellen Alkoxysilan weiter umgesetzt wird. Das entstehende alkoxysilanfunktionelle Präpolymer enthält Harnstoff- und Urethangruppen in hoher Konzentration, die zu einer hohen Viskosität der Produkte führen. Neben Polyethern kann das organische Rückgrat beispielsweise aus Polyurethanen, Polyestern, Polyacrylaten, Polyvinylestern, Ethylen-Olefincopolymeren, Styrol-Butadiencopolymeren oder Polyolefinen bestehen. Beschrieben werden derartige Präpolymere u.a. in EP 0 372 561, WO 00/37533 oder US 6,207,766. Daneben sind aber auch Systeme weit verbreitet, deren Rückgrat ganz oder zumindest zum Teil aus Organosiloxanen besteht, beschrieben u.a. in WO 96/34030. Nachteilig an all den beschriebenen Präpolymeren ist die geringe Funktionalisierungsdichte der nur in α,ω-Position mit Silylgruppen terminierten Präpolymeren.

Dieser Nachteil kann überwunden werden durch den Einsatz von, in der noch nicht offengelegten Schrift DE 10 2008 000360.3 beschriebenen, neuen Silylgruppen tragenden Hydroxylverbindungen oder auch Alkoxysilylgruppen tragenden Polyetheralkoholen, die durch Alkoxylierung epoxidfunktioneller Alkoxysilane an Doppelmetallcyanid (DMC)-Katalysatoren zugänglich sind. Die in der noch nicht offengelegten Schrift DE 10 2008 044373.5 beschriebene Alkoxysilylgruppen tragende Polyethersiloxanen können ebenfalls durch Doppelmetallcyanidkatalyse hergestellt werden. Die beiden Schriften werden hiermit vollumfänglich als Teil und Gegenstand dieser Offenbarung eingeführt. Diese neuen Polyether (siloxan) strukturen, die sowohl Alkoxysilanfunktionen innerhalb der Sequenz der Oxyalkyleneinheiten der Polyetherkette als auch neue Multialkoxysilanfunktionen in ihren Termini aufweisen können, erlauben es, die Ankergruppendichte in dem angestrebten Präpolymer nach Belieben, d.h. angepasst auf die jeweilige anwendungstechnische Fragestellung einzustellen. Zudem weisen sie noch freie Hydroxylgruppen auf, die zur weitergehenden Funktionalisierung zur Verfügung stehen.
Insofern die Präpolymere wasserunlöslich sind können zur Erniedrigung der Viskosität der Präpolymeren flüchtige organische Lösungsmittel eingesetzt werden. Solche Lösungsmittel werden oft mit dem Kürzel VOC (Volatile Organic Compounds) bezeichnet. Bei einer Vielzahl von organischen Lösungsmitteln konnte eine gesundheitsschädliche Wirkung festgestellt werden oder aber wird zumindest vermutet. Infolgedessen wurden eine Reihe von Gesetze und Regulierungen zum Schutz von Umwelt und Gesundheit erlassen mit dem Ziel, die VOC-Emissionen zu reduzieren. Die europäische VOC-Richtlinie von 1999 zum Beispiel schreibt gesetzliche Anforderungen zur Minderung von VOC-Emissionen vor (Richtlinie 1999/13/EG beziehungsweise 2004/42/EG).
Als Alternative zu den organischen Lösungsmitteln bietet es sich an, die wasserunlösliche Präpolymere in der Form einer wässrigen Emulsion zu verwenden. Die Verwendung von Wasser ist umwelttechnisch unbedenklich. Aus anwendungstechnischer Sicht ist der Verwendung von Wasser die Verwendung von organischen Lösemitteln sogar vorzuziehen, weil die Entfernung, eventuelle Korrekturen oder Nachbesserungen beim Auftragen des Materials vor dem Aushärten mit Wasser beziehungsweise einer wässrigen Tensidlösung gemacht werden können. Allerdings kommt den beschriebenen Präpolymeren die Eigenschaft einer strukturbedingten Hydrolyselabilität zu. Es fällt daher nicht einfach, die Präpolymere in Form einer wässrigen Emulsion einzusetzen. Zur Emulgierung werden die Substanzen unter Verwendung sogenannter Emulgatoren und Einsatz von Scherkräften in Wasser emulgiert. Die Viskosität beziehungsweise das rheologische Profil einer derartigen Emulsion wird in erster Linie durch die Rheologie der kontinuierlichen, wässrigen Phase bestimmt. Je nach Anwendungsbereich kann das rheologische Profil mit Hilfe von Additiven variiert werden, von einer sehr niedrigviskosen Emulsion bis hin zu einer hochviskosen Paste.
Generell kommen als Emulgatoren sowohl amphiphile Moleküle als auch Partikel in Betracht. Durch Partikel stabiliserte Emulsionen werden auch als 'Pickering'-Emulsionen bezeichnet (S. U. Pickering: "Emulsions", J. Chem. Soc. 1907, Vol. 91, pp. 2001-2021). Durch Anlagerung an die Grenzfläche Wasser-Präpolymer verhindern solche Emulgatoren die Koaleszenz der Emulsionstropfen und damit das Brechen der Emulsion. Wenn die Präpolymere selber amphiphilen Charakter haben, kann es sein, dass sich die Zugabe von zusätzlichen Emulgatoren erübrigt. In diesem Fall spricht der Fachmann von einem selbst-emulgierenden System.
Die erfinderische Aufgabe ist es daher, stabile und hydrolysebeständige Emulsionen von in den Schriften DE 10 2008 000360.3 und DE 10 2008 044373.5 beschriebenen, silylgruppenhaltigen Präpolymeren in Wasser herzustellen.
Emulsionen von silylierten Präpolymeren sind Gegenstand einer Vielzahl von Schriften. In der Schrift DE 2558653 beschreibt Chang Emulsionen aus selbstemulgierenden, Silylgruppen tragende Polyurethane und deren Anwendung für die Beschichtung von Oberflächen. Die Polyurethane werden hergestellt durch Reaktion von einem Polyol mit einem Überschuss an Polyisocyanat. In einem zweiten Schritt wird das überschüssige Isocyanat teilweise mit einem reaktionsfähigen Silan umgesetzt. Eine stabile Emulsion wird erhalten, wenn dieses Polymerisat unter Scherung in Wasser eingearbeitet wird. In der Schrift US 4,376,149 beschreibt Martin emulgierte Gemische aus silylierten Polyethern und OH-Siloxanen sowie deren Einsatz bei der Beschichtung von Textilien. Shimizu und Yoshida beschreiben in der Schrift JP 1318066 wässrige Emulsionen aus silylierten Polyethern, die zusätzlich kolloidale Kieselsäure enthalten können. Die silylierten Polyether werden hergestellt durch die Verknüpfung von einem Polypropylenglykoldiglycidylether mit einem Trialkoxysilylglycidylether durch ein cyclisches oder aromatisches Diamin. Klauck, Maier und Berthauer beschreiben in der Schrift DE 4215648 lagerstabile Kontaktklebstoffe auf Basis von Lösungen, beziehungsweise Emulsionen von kationisch modifizierten, alkoxysilanterminierten Polyurethanen. In der Schrift DE 19955825 beschreiben Majolo, Klauck, Klein, Ernst, Schilling und Loth Emulsionen von silylfunktionalisierten Polymeren mit einem Massenanteil Polymer von mindestens 60%. Ebenfalls beschrieben sind Emulsionen von Gemischen aus mindestens zwei verschiedenen Polymeren, eines mit und eines ohne Silylgruppen. Es wird beansprucht, dass die beschriebenen Emulsionen silylfunktionalisierte Polymere im Vergleich zu nicht-emulgierten Polymeren eine verbesserte Lagerstabilität aufweisen. Altes et al. beschreiben in den Schriften US 6,713,558 und US 6,831,128 wasserverdünnbare Emulsionen silylierter Elastomere und deren Herstellung. Die Emulsionen haben einen Massenanteil an Elastomer von mindestens 75% bei einer Tropfengröße von kleiner als 5 µm. Hattemer, Unger, Ferencz, Bachon, Bathelt und Schmidt beschreiben in der Schrift WO 2006/122684 Emulsionen aus α-silylterminierten Präpolymeren, deren Herstellung und Anwendung. Wu, You und Huang beschreiben in der Schrift WO 2007/072189 Emulsionen aus Silylgruppen tragenden Präpolymeren. Die Emulsionen werden stabilisiert durch die Zugabe von Nanosilica. Die Zugabe von konventionellen Emulgatoren ist optional und soll in manchen Fällen eine zusätzliche Verbesserung der Emulsionsstabilität bewirken. In der Schrift WO 2008/090458 beschreiben Wu, You und Huang Emulsionen aus Silylgruppen tragenden Präpolymeren. Die Emulsionen werden stabilisiert durch die Zugabe von monomeren Silanen. Die Zugabe von sowohl Nanosilica als auch von konventionellen Emulgatoren ist wiederum optional, und soll in manchen Fällen zu einer zusätzlichen Verbesserung der Emulsionsstabilität führen. Die Auswahl von geeigneten Emulgatoren, beziehungsweise die Herstellung von stabilen, für die jeweilige Anwendung geeigneten Emulsionen ist keineswegs trivial und stellt auch für den Fachmann eine große Herausforderung da. Insbesondere die Hydrolyselabilität der silylgruppenhaltigen Präpolymeren lässt a n der Voraussagbarkeit von stabilen Emulsionsystemen Zweifel aufkommen.
Trotz de r vermuteten und strukturell bedingten Hydrolyseempfindlichkeit der in den Schriften DE 10 2008 000360.3 und DE 10 2008 044373.5 beschriebenen Präpolymere wurde jetzt überraschenderweise gefunden dass die Präpolymere in stabile Emulsionen überführt werden können.
Gegenstand der Erfindung sind daher stabile, hydrolysebeständige wässrige Emulsionen auf Basis von entweder Silylgruppen tragenden Hydroxylverbindungen, wie in der Schrift DE 10 2008 000360.3 beschrieben und/oder silylfunktionalisierten Polyethersiloxanen, auch alkoxysilylfunktionelle Siliconpolyether oder alkoxysilylfunktionelle Polyether-Siloxan-Copolymere genannt, wie in der Schrift DE 10 2008 044373.5 beschrieben.
Ein Gegenstand der Erfindung sind daher stabile, hydrolysebeständige wässrige Emulsionen enthaltend silylfunktionalisierte Polyether und/oder silylfunktionalisierte Polyethersiloxane mit jeweils mindestens einer nicht-terminalen Silylfunktion wie in dem Patentansprüchen offenbart: Diese können bevorzugt mehr als eine nicht-terminale und besonders bevorzugt mehr als eine nicht-terminale sowie gleichzeitig mindestens eine terminale Silylfunktion im Molekül enthalten. Insbesondere enthalten sie mehr als eine (1) Alkoxysilyfunktion pro gegenüber Epoxidgruppen reaktives Kettenende.
Eine Emulsion wird als stabil bezeichnet wenn die Emulsion bevorzugt nach einem Monat Lagerung bei Raumtemperatur, mindestens aber nach einer Woche Lagerung bei Raumtemperatur keine mit dem Auge sichtbaren Anzeichen des Brechens zeigt. Das Brechen einer Emulsion ist hier definiert als die Separation in eine makroskopische Öl- beziehungsweise Wasserphase. Eine Emulsion wird als hydrolysestabil bezeichnet wenn nach einem Monat Lagerung bei Raumtemperatur, mindestens aber nach einer Woche Lagerung bei Raumtemperatur der Gehalt an freiem Alkohol in der Emulsion einer Spaltung von maximal 10 Gew.-% der emulgierten Alkoxygruppen entspricht.
Der optimale Massenanteil Wasser beziehungsweise Polyether(siloxan) ist abhängig von der Anwendung. Es bleibt dem Fachmann überlassen, für einen bestimmten Anwendungsbereich den optimalen Massenanteil Polyether(siloxan) zu finden. Dem Fachmann ist es allerdings geläufig, dass der bevorzugte Anteil an Wasser in solchen Emulsionen zwischen 10 Gew.-% bis 97 Gew.-%, besonders bevorzugt zwischen 20 Gew.-% und 90 Gew.-% und insbesondere größer als 30 Gew.-% liegt.

Die silylfunktionalisierten Polyether, wie in der Schrift DE 10 2008 000360.3 beschrieben, bestehen aus mit Alkoxysilylgruppen substituierten Ketten, die durch die Wahl der Fragmente d bis j der Formel (1), entsprechend der durch die Reaktion unter Ringöffnung der Reaktionskomponenten in die Polymerkette eingefügten Fragmente, gezielt hochfunktionalisiert sind und damit für verschiedenartige Anwendungsgebiete maßgeschneidert werden können 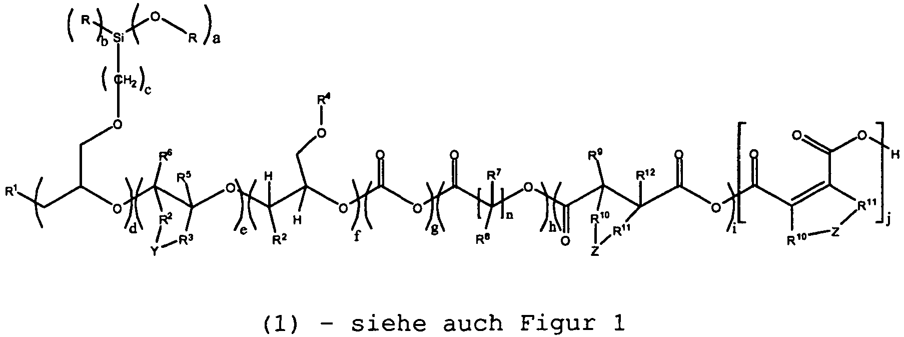 wobei
- a: eine ganze Zahl von 1 bis 3, vorzugsweise 3 ist,
- b: eine ganze Zahl von 0 bis 2, vorzugsweise 0 bis 1, besonders bevorzugt 0 ist, die Summe von a und b gleich 3 ist,
- c: eine ganze Zahl von 0 bis 22, bevorzugt von 0 bis 6, besonders bevorzugt gleich 1 oder 3 ist,
- d: eine ganze Zahl von 1 bis 1.000, bevorzugt größer 1 bis 100, besonders bevorzugt größer 1 bis 20 und insbesondere größer 1 bis 10 ist, oder größer 10 bis 100 ist,
- e: eine ganze Zahl von 0 bis 10.000, .bevorzugt 0 bis 1000, besonders bevorzugt 0 bis 300 und insbesondere 0 bis 100 ist,
- f: eine ganze Zahl von 0 bis 1.000, bevorzugt 0 bis 100, besonders bevorzugt 0 bis 50 und insbesondere 0 bis 30 ist,
- g: eine ganze Zahl von 0 bis 1.000, bevorzugt 0 bis 200, besonders bevorzugt 0 bis 100 und insbesondere 0 bis 70 ist,
- h, i und j: ganze Zahlen von 0 bis 500, bevorzugt 0 bis 300, besonders bevorzugt 0 bis 200 und insbesondere 0 bis 100 ist, und mit der Maßgabe, dass die Fragmente mit den Indices d bis j untereinander frei permutierbar, d.h. in der Sequenz innerhalb der Polyetherkette gegeneinander austauschbar sind,
- n: eine ganze Zahl zwischen 2 und 8 ist und
- R: einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen darstellt. Bevorzugt entspricht R Methyl-, Ethyl-, Propyl-, Isopropyl-, n-Butyl- und sek.-Butylgruppen, und insbesondere Ethyl- oder Methylgruppen, mit
- R¹: gleich einem gesättigten oder ungesättigten, gegebenenfalls verzweigten Rest, der vorzugsweise über ein Sauerstoffatom angebunden ist, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ eine ggf. einfach oder mehrfach annelierte aromatische Aryloxy-Gruppe, oder eine siliciumhaltige Verbindung, insbesondere ein Siloxanrest oder Poly(siloxan)rest ist, der alkyl- und/oder arylgruppen- und/oder polyethersubstituiert sein kann,
- R² oder R³, sowie R⁵ oder R⁶: gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein, ist Y nicht vorhanden, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste R² oder R³ Wasserstoff. R²-R³ kann eine -CH₂CH₂CH₂CH₂-Gruppe, Y damit eine - (CH₂CH₂-) -Gruppe sein. Die Kohlenwasserstoffreste R² und R³ können ihrerseits weiter substituiert sein und funktionelle Gruppen wie Halogene, Hydroxylgruppen oder Glycidyloxypropylgruppen tragen,
- R⁴: entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann.
- R⁷ und R⁸: sind unabhängig voneinander entweder Wasserstoff, Alkyl-, Alkoxy-, Aryl- oder Aralkylgruppen, die unter Ringöffnungspolymerisation zu vernetzbaren, Alkoxysilangruppen enthaltenden Polyetherestern copolymerisiert werden,
- R⁹, R¹⁰, R¹¹ und R¹²: sind unabhängig voneinander entweder Wasserstoff, Alkyl-, Alkenyl-, Alkoxy-, Aryl- oder Aralkylgruppen. Der Kohlenwasserstoffrest kann cycloaliphatisch oder aromatisch über das Fragment Z verbrückt sein, wobei Z sowohl einen divalenten Alkylen- als auch Alkenylenrest darstellen kann.

Die verschiedenen Monomereinheiten sowohl der Fragmente mit den Indexzahlen d bis j als auch der eventuell vorhandenen Polyoxyalkylenkette des Substituenten R¹ können untereinander blockweise aufgebaut sein oder aber auch einer statistischen Verteilung unterliegen. Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (1).

Wie ²⁹Si-NMR- und GPC-Untersuchungen ergeben, bedingt das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R gegen einen langkettigen modifizierten Alkoxysilylpolymerrest ausgetauscht. Bimodale wie auch multimodale GPC Kurven belegen, dass die Alkoxylierungsprodukte neben den nicht umgeesterten Spezies, wie sie in Formel (1) wiedergegeben sind, solche mit der doppelten, zum Teil dreifachen oder gar vielfachen Molmasse enthalten. Formel (1) gibt mithin die komplexe chemische Realität nur vereinfacht wieder.

Somit enthalten die Zusammensetzungen auch Verbindungen, in denen die Summe der Indices (a) plus (b) in Formel (1) im statistischen Mittel kleiner als 3 ist, da ein Teil der OR-Gruppen durch Silylpolyethergruppen ersetzt werden kann. Die Zusammensetzungen enthalten somit Spezies, die am Siliziumatom unter Abspaltung von R-OH und Kondensationsreaktion mit der reaktiven OH-Gruppe eines weiteren Moleküls der Formel (1) ausgebildet werden. Diese Reaktion kann mehrfach ablaufen bis z.B. alle RO-Gruppen am Silizium gegen weitere Moleküle der Formel (1) ausgetauscht sind. Das Vorhandensein von mehr als einem Signal in typischen ²⁹Si-NMR-Spektren dieser Verbindungen untermauert das Auftreten von Silylgruppen mit unterschiedlichem Substitutionsmuster. Die angegebenen Werte und Vorzugsbereiche für die Indizes a bis j sind somit auch nur als Mittelwerte über die verschiedenen, einzeln nicht fassbaren Spezies zu verstehen.

Wie dem Fachmann bekannt, geschieht die Vernetzung oder Härtung von Alkoxysilylgruppen in einem zweistufigen chemischen Prozess, bei dem in einem ersten Schritt in Gegenwart von Wasser, wobei auch Luftfeuchtigkeit ausreichen kann, die am Silizium gebundenen Alkoxygruppen als korrespondierende Alkohole abgespalten und SiOH-Gruppen ausgebildet werden. Letztere kondensieren im Falle der Selbstkondensation anschließend unter Ausbildung von Si-O-Si-Brücken miteinander und bilden polymere Werkstoffe. Alternativ reagieren die SiOHfunktionellen Intermediate mit reaktive Gruppen aufweisenden Substraten, z.B. besonders gut mit OH-Funktionen tragenden oxidischen und/oder silikatischen Oberflächen (beispielsweise Mullit, Aluminiumoxid oder auch Magnesiumoxid), und führen zu einer exzellenten chemischen Verankerung auf dem jeweiligen Untergrund. Die Härtungsgeschwindigkeit lässt sich auf vielfältige Weise durch Zusatz von Katalysatoren oder Temperaturvariation beeinflussen.

Bevorzugt ist die Verwendung härtbarer Silylpolyether 1 mit mehr als 1 Alkoxysilylfunktion, ganz besonders bevorzugt solche mit im Mittelwert mehr als einer derartigen Silylgruppe pro terminaler Hydroxylgruppe in Emulsionszusammensetzungen.

Die bevorzugt eingesetzten Polyethersiloxane der DE 10 2008 044373.5 tragen mindestens eine Alkoxysilylgruppe in der Copolymerstruktur. Die erfindungsgemäß verwendbaren alkoxysilylmodifizierten Polyether der Formel (1) können durch die Alkoxylierung von silylgruppenmodifizierten Epoxiden und einem Startalkohol unterschiedlichster Provenienz gewonnen werden.

Die Herstellung und die einsetzbaren Epoxid-Strukturtypen sind ausführlich in der nicht vorveröffentlichten europäischen Patentanmeldung mit der Anmeldenummer EP 09152883.6 beschrieben. Der Inhalt der Beschreibung und der Ansprüche der EP 09152883.6 und der entsprechenden korrespondierenden nicht vorveröffentlichten Prioritätsanmeldung DE 10 2008 00360.3 ist hiermit vollumfänglich als Bestandteil diese Offenbarung anzusehen.

Die Silylpolyether 1 gewähren die synthetische Freiheit, zwischen Alkoxysilylgruppen aufweisenden Polyoxyalkylenverbindungen zu wählen, die die hydrolysierend vernetzbaren Alkoxysilylfunktionen sowohl terminal, als auch isoliert, blockartig kumuliert als aber auch statistisch eingestreut in die Polyoxyalkylenkette enthalten. Derartige Silylpolyether 1 der Formel (1), zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere können beliebig blockartig aneinander gereiht oder statistisch in die Polymerkette eingebaut sein. Die durch die Reaktion unter Ringöffnung der Reaktionskomponenten in die entstehende Polymerkette eingefügten Fragmente sind in ihrer Sequenz untereinander frei permutierbar, mit der Einschränkung, dass cyclische Anhydride sowie Kohlendioxid statistisch insertiert, also nicht in homologen Blöcken, in der Polyetherstruktur vorliegen.

Werden als Silylpolyether 1 solche eingesetzt, die am Siliziumatom mehr als 1 der hochfunktionalisierten Polyalkylenetherfragmente gebunden enthalten, so liegen hochfunktionalisierte Verbindungen vor, bei denen Polyetherketten, die jeweils von einem Startalkohol der Formel R¹-H (2) abgeleitet sind und die in ihrer Abfolge die frei permutierbaren Fragmente enthalten, die durch die Reaktion unter Ringöffnung der Reaktionskomponenten in die entstehende Polymerkette eingefügt wurden, über - CH₂-O-(CH₂)_{c}-Si-(CH₂)_{c}-O-CH₂-Brücken miteinander verknüpft sind. Es handelt sich um hochkomplexe, hochfunktionalisierte Strukturen. Auch hier lassen sich die Funktionalitäten gezielt auf ein gewünschtes Anwendungsgebiet einstellen. Der Verzweigungsgrad und die Komplexität der erhaltenen Polymerstrukturen steigen mit zunehmender Epoxyfunktionalität der Silylmonomere. Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Die Gruppe R¹ entstammt entweder einem Startalkohol R¹-H (2), der bei der DMC-katalysierten Alkoxylierung eingesetzt wird, beispielhaft für Verbindungen der Formel (2) seien Allylalkohol, Butanol, Octanol, Dodecanol, Stearylalkohol, 2-Ethylhexanol, Cyclohexanol, Benzylalkohol, Ethylenglykol, Propylenglykol, Di-, Tri-und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt. Soll allerdings eine Siloxangruppierung als R¹ in den Silylpolyether eingeführt werden, so werden beispielsweise α,ω-Dihydroxypolysiloxane, Wasserstoffsiloxane oder hydroxylfunktionelle Polyethersiloxane als Ausgangsverbindungen verwendet.

Dabei können die Fragmente, die durch die Reaktion unter Ringöffnung in die entstehende Polymerkette eingefügt wurden, im Rahmen der vorhergehenden Definitionen blockartig oder statistisch verteilt, nicht nur in der Kette einer Polyether-Struktureinheit vorkommen, sondern auch statistisch verteilt über die Vielzahl der gebildeten und über -CH₂-O-(CH₂)_{c}-Si-(CH₂)_{c}-O-CH₂-Brücken miteinander verbundenen Polyetherstruktureinheiten, vorkommen. Die Mannigfaltigkeit der Strukturvariationen der Verfahrensprodukte gestattet damit keine eindeutige formelmäßige Beschreibung.

Die verschiedenen Monomereinheiten sowohl der Fragmente mit den Indexzahlen d bis j als auch der eventuell vorhandenen Polyoxyalkylenkette des Substituenten R¹ können untereinander blockweise aufgebaut sein oder aber auch einer statistischen Verteilung unterliegen. Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (1).

Ganz besonders bevorzugt werden 3-Glycidyloxyalkyltrialkoxysilane oder 3-Glycidyloxyalkyldialkooxyalkylsilane als Monomere eingesetzt.

Je nach verwendetem epoxidfunktionellem Alkoxysilan und evtl. eingesetzten weiteren Monomeren, sowie evtl. auch Kohlendioxid können Alkoxysilylgruppen-modifizierte Polyetheralkohole (1) hergestellt werden, sowie deren beliebig aufgebaute Gemische.

Wird als R¹ damit ein (Poly-)Siloxanrest in das Molekül eingeführt, so werden alkoxysilylfunktionelle Polyethersiloxane erfindungsgemäß verwendet.

Diese alkoxysilylfunktionellen Polyethersiloxane und deren Mischungen lassen sich nach zwei verschiedenen Verfahren herstellen, wie in DE 2008 0044373.5 dargestellt:
1) Alkoxylierung von Siliconpolyethercopolymeren bzw. Polysiloxanen mit epoxyfunktionellen Alkoxysilanen an Doppelmetallcyanid-Katalysatoren
   und/oder
2) Hydrosilylierende Verknüpfung von ungesättigten Alkoxysilylgruppen tragenden Polyethern, die zuvor durch eine Alkoxylierung der entsprechenden ungesättigten Startverbindungen mit epoxyfunktionellen Alkoxysilanen an DMC-Katalysatoren gewonnen wurden.

Die silylfunktionalisierten Polyethersiloxane, wie in der Schrift DE 10 2008 044373.5 beschrieben, sind Verbindungen gemäß Formel (3) und deren Mischungen, 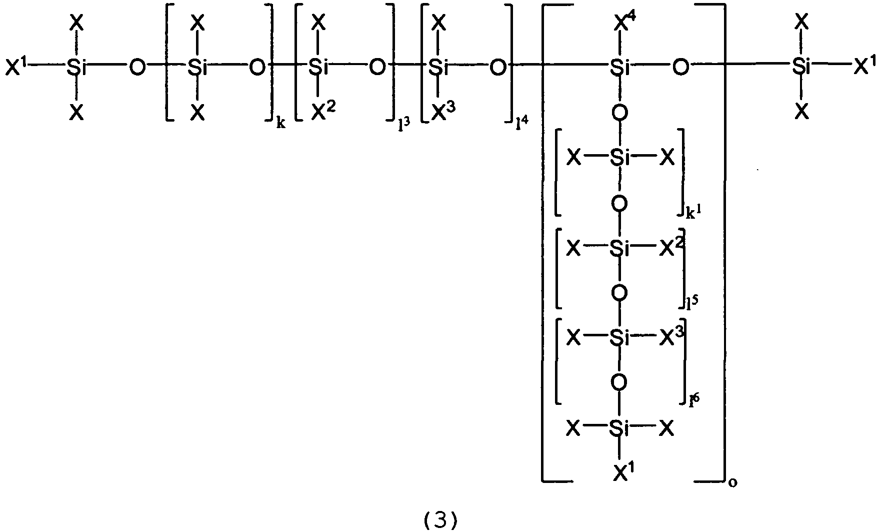 wobei
- X: ein linearer, cyclischer oder verzweigter, aliphatischer oder aromatischer, gesättigter oder ungesättigter Kohlenwasserstoffrest mit 1 bis 20 C-Atomen ist, der ggfs. Heteroatome wie Sauerstoff, Stickstoff, Phosphor oder Schwefel enthalten kann, der jedoch vorzugsweise eine Methylgruppe ist,
- X¹: wahlweise X, X² oder X³ ist,
- X²: ein Alkoxysilylgruppen tragender OH-funktioneller, ggfs. Ester- oder Carbonat-modifizierter Polyoxyalkylenrest der Formel (3a) ist,

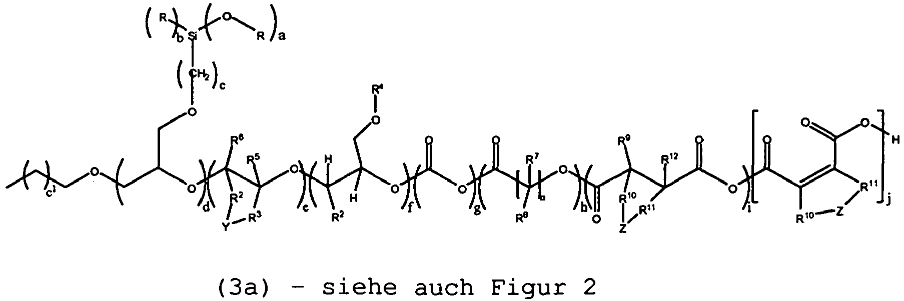

- X³: ein endständig veretherter Polyoxyalkylenrest der Formel (3b) ist, 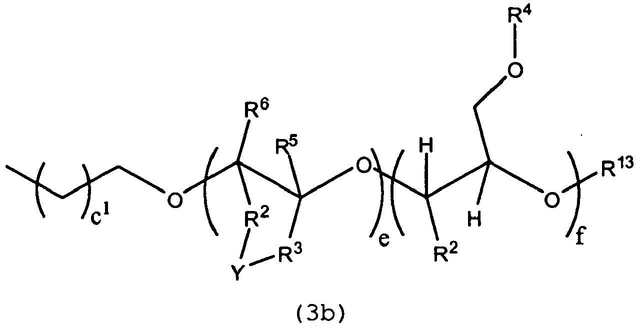
wobei
- R¹³: wahlweise eine Alkylgruppe mit 1 bis 18 C-Atomen, vorzugsweise Methyl ist, oder ein mit einer monofunktionellen Carbonsäure endständig veresterter Polyoxyalkylenrest der Formel (3c) ist, 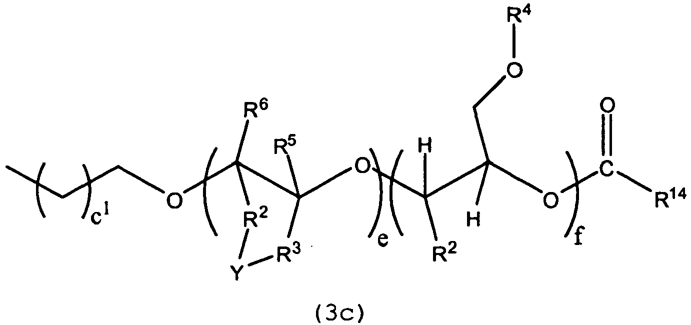
wobei
- R¹⁴: ein gesättigter oder ein ein- oder mehrfach ungesättigter, entweder linearer oder verzweigter, aliphatischer oder aromatischer Kohlenwasserstoffrest mit 1-30 Kohlenstoffatomen ist, der seinerseits OH-Gruppen tragen kann, vorzugsweise ein Methylrest ist,
- X⁴: entweder X¹ oder dem Fragment der Formel (3d) entspricht 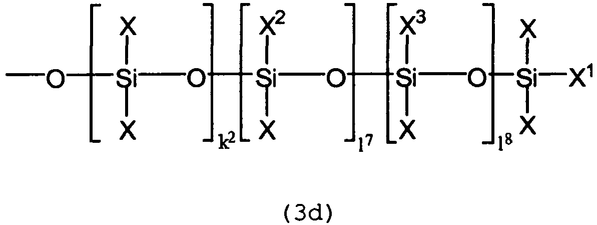
wobei
- k, k¹ und k²: unabhängig voneinander ganze Zahlen von 0 bis 500, vorzugsweise von 10 bis 200, insbesondere 15 bis 100 sind,
- 1³, 1⁴, 1⁵, 1⁶, 1⁷ und 1⁸: unabhängig voneinander ganze Zahlen von 0 bis 60, vorzugsweise von 0 bis 30, insbesondere von 0 bis 25 sind,
- o: eine ganze Zahl von 0 bis 10, vorzugsweise von 0 bis 3 ist, mit der Maßgabe, dass
- X¹: mindestens einmal gleich X² ist, falls die Summe aus 1³, 1⁵ und 1⁷ Null ist, und dass die Summe aus 1³, 1⁵ und 1⁷ mindestens 1 ist, wenn X¹ ungleich X² ist,
wobei
- a: eine ganze Zahl von 1 bis 3, vorzugsweise 3 ist,
- b: eine ganze Zahl von 0 bis 2, vorzugsweise 0 bis 1, besonders bevorzugt 0 ist, die Summe von a und b gleich 3 ist,
- c: eine ganze Zahl von 0 bis 22, bevorzugt von 0 bis 6, besonders bevorzugt gleich 1 oder 3 ist,
- c¹: eine ganze Zahl von 0 bis 24, vorzugsweise von 0 bis 12, besonders bevorzugt von 0 bis 8, ganz besonders bevorzugt von 0 bis 4 ist,
- d: eine ganze Zahl von größer 1 bis 1.000, bevorzugt größer 1 bis 100, besonders bevorzugt größer 1 bis 20 und insbesondere größer 1 bis 10 ist, oder größer 10 bis 100 ist,
- e: eine ganze Zahl von 0 bis 10.000, bevorzugt 0 bis 1000, besonders bevorzugt 0 bis 300 und insbesondere 0 bis 100 ist,
- n: eine ganze Zahl von 2 bis 8 ist und
- f, g, h, i und j: jeweils ganze Zahlen von 0 bis 500, bevorzugt 0 bis 300, besonders bevorzugt 0 bis 200, insbesondere 0 bis 100 sind,
mit der Maßgabe, dass die Fragmente mit den Indices d bis j untereinander frei permutierbar, d.h. in der Sequenz innerhalb der Polyetherkette gegeneinander austauschbar sind und wobei die verschiedenen Monomereinheiten der Fragmente mit den Indexzahlen d bis j untereinander blockweise aufgebaut sein oder aber auch einer statistischen Verteilung unterliegen können und mit der Maßgabe, dass die Fragmente mit den Indices k, k¹, k², 1³, 1⁴, 1⁵, 1⁶, 1⁷, 1⁸ und o untereinander frei permutierbar, d.h. innerhalb der Siloxankette gegeneinander austauschbar sind und wahlweise statistisch verteilt oder blockartig aneinandergereiht vorliegen können.

R stellt einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen dar, bevorzugt eine Methyl-, Ethyl-, Propyl-, Isopropyl-, n-Butyl- oder sek.-Butylgruppe.

R² oder R³, sowie R⁵ oder R⁶ sind gleich oder unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein; ist Y gleich 0, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste in R² oder R³ Wasserstoff. Die Kohlenwasserstoffreste R² und R³ können ihrerseits weiter substituiert sein und funktionelle Gruppen wie Halogene, Hydroxylgruppen oder Glycidyloxypropylgruppen tragen.

R⁴ ist ein linearer oder verzweigter Alkylrest von 1 bis 18 Kohlenstoffatomen, der an einen aromatischen oder cycloaliphatischen Rest gebunden sein kann.
R⁷ und R⁸ sind unabhängig voneinander entweder Wasserstoff, Alkyl-, Alkoxy-, Aryl- oder Aralkylgruppen.
R⁹, R¹⁰, R¹¹ und R¹² sind unabhängig voneinander entweder Wasserstoff, Alkyl-, Alkenyl-, Alkoxy-, Aryl- oder Aralkylgruppen, wobei der Kohlenwasserstoffrest cycloaliphatisch oder aromatisch über das Fragment Z verbrückt sein, wobei Z sowohl einen divalenten Alkylenals auch Alkenylenrest darstellen kann.

Die durch Formel (3) beschriebenen Polyethersiloxane schließen die gegebenenfalls prozessbedingt enthaltenen Nebenprodukte wie freie Überschusspolyether oder Umlagerungsprodukte mit ein.

Die verschiedenen Monomereinheiten innerhalb der Siloxankette bzw. innerhalb der damit verknüpften Polyetherkette können untereinander wahlweise blockweise oder statistisch aufgebaut sein. Die in den hier angeführten Formeln wiedergegebenen Indexzahlen und die Wertebereiche der angegebenen Indizes verstehen sich als die Mittelwerte der möglichen statistischen Verteilung der tatsächlichen isolierten Strukturen und/oder deren Mischungen. Dies gilt auch für als solche an sich exakt wiedergegebenen Strukturformeln. Die Polyethersiloxane mit Alkoxysilylfunktionalisierung der Formel (3) stellen zumeist kammartig verzweigte Copolymere dar, in denen die Polyetherketten jeweils über SiC-Bindungen an das Polysiloxangrundgerüst gebunden sind.

Ebenfalls erfindungsgemäß verwendbar sind lineare Polyether-Siloxan-Polyether-Triblockcopolymere der Formel (5), bei denen die mit Alkoxysilylgruppen ausgestatteten Polyetherketten über eine Si-O-C-Verknüpfung an den Siloxankörper gebunden sind, 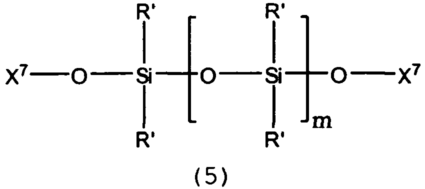 wobei
- R': einem oder mehreren gleichen oder verschiedenen linearen oder verzweigten, gesättigten, einfach oder mehrfach ungesättigten Alkylresten mit 1 bis 20, insbesondere 1 bis 10 Kohlenstoffatomen entspricht, und
- m: eine ganze Zahl von 0 bis 5000, bevorzugt 2 bis 5000, besonders bevorzugt von 5 bis 4000 ist und insbesondere 9 bis 3000 ist, und
- X⁷: dem Polyetherfragment der Formel (5a) entspricht.

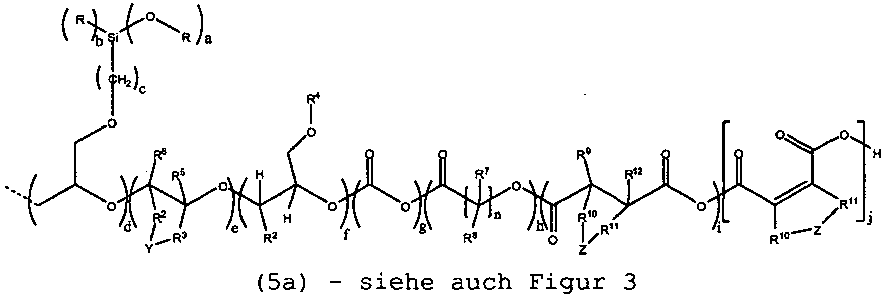

Die Substituenten R, R²-R¹², die Reste Y und Z sowie die Indizes a, b, c, d, e, f, g, h, i, j und n entsprechen den zuvor für die Verbindungen der Formel (3a) genannten Definitionen.

Ein weiterer Gegenstand der Erfindung sind Emulsionen in denen die Verbindungen der Formeln (1), (3) und/oder (5) jeweils alleine oder in beliebigen Mischungen miteinander eingesetzt werden.

Die in den Formeln (3) bis (3d) und (5) sowie (5a) wiedergegebenen Indexzahlen und die Wertbereiche der angegebenen Indizes verstehen sich als die Mittelwerte der möglichen statistischen Verteilung der tatsächlichen vorhandenen Strukturen und/oder deren Mischungen.

Als konventionelle Emulgatoren für die erfindungsgemäßen Präpolymer-Emulsionen kommen prinzipiell sämtliche anionische, nicht-ionische, kationische und amphotere Emulgatoren sowie Emulgatormischungen in Betracht.

Der oder die Mischung der anionische(n) Emulgator(en) kann/können ausgewählt sein aus der Gruppe umfassend Alkylsulfate, Arylsulfonate, Fettalkoholsulfate, Alkylsulfonate, Paraffinsulfonate, Alkylethersulfate, Alkylpolyglykolethersulfate, Fettalkolholethersulfate, Alkylbenzolsulfonate, Alkylnaphthylsulfonaten, Alkylphenolethersulfate, Alkylphosphate, Phosphorsäuremono-, di-, tri-Ester, Alkyletherphosphate, ethoxylierte Fettalkoholphosphorsäureester, Alkylphenoletherphosphate, Phosphonsäureester, Sulfobernsteinsäurediester, Sulfobernsteinsäuremonoester, ethoxylierte Sulfobernsteinsäuremonoester, Sulfosuccinamide, α-Olefinsulfonate, Alkylcarboxylate, Alkylethercarboxylate, Alkylpolyglykolcarboxylate, Fettsäureisethionat, Fettsäuremethyltaurid, Fettsäuresarkosid, Arylsulfonate, Naphthalinsulfonate, Alkylglycerylethersulfonate, sulfatierte Öle, Polyacrylate und/oder α-Sulfofettsäureester. Der anionische Emulgator kann zum Beispiel Natrium, Kalium, Ammonium, Monoethanolammonium, Triethanolammonium oder sonstige organisch substituierte Ammoniumkationen als Gegenion enthalten.

Bevorzugte, anionische Emulgatoren sind Natriumdodecylbenzolsulfonat, Natriumlaurylsulfat und Natriumlaurylethersulfat.

Der oder die kationische(n) Emulgator(en) kann/können ausgewählt sein aus der Gruppe umfassend sowohl primäre, sekundäre als auch tertiäre Amine und deren Salze, Alkyltrimethylammoniumsalze, Dialkyldimethylammoniumsalze, Trialkylmethylammoniumsalze, Tetraalkylammoniumsalze, alkoxylierte Alkylammoniumsalze, Esterquats, Diamidoaminquats, Alkyloxyalkylquats, quarternäre Alkylphosphoniumsalze, ternäre Alkylsulfoniumsalze, Alkylimidazoliumsalze, Alkyloxazoliniumsalze, Alkylpyridiumsalze oder N,N-Dialkylmorpholiniumsalze. Der kationische Emulgator kann zum Beispiel Chlorid, Bromid, Methylsulfat, Sulfat oder dergleichen als Gegenion enthalten.
Der oder die nichtionische(n) Emulgator(en) kann/können ausgewählt sein aus der Gruppe umfassend Alkohole, Fettsäuren, Alkoholethoxylate, Polyoxyethylen-Polyoxypropylenalkylether, Aminalkoxylate, Fettalkoholpolyglykolether, Fettaminpolyglykolether, Fettsäureethoxylate, F e ttsäurepolyglykolester, Glyceridmonoalkoxylate, Alkanolamide, Fettsäurealkylolamide, ethoxylierte Alkanolamide, ethoxylierte Ester, beispielsweise Rizinusölethoxylate, Fettsäurealkylolamido-ethoxylate, Ethylenoxid-Propylenoxid-Blockcopolymere, Alkylphenolethoxylate, Alkylglucoside, partielle Ester aliphatischer Carbonsäuren mit polyfunktionellen Alkoholen, beispielsweise Sorbitanester, Glycerinester oder Polyglycerinester, ethoxylierte partielle Ester aliphatischer Carbonsäuren mit polyfunktionellen Alkoholen, beispielsweise ethoxylierte Sorbitanester, ethoxylierte Glycerinester oder ethoxylierte Polyglycerinester, polyethoxylierte Polystyrolphenylethern, Amide aliphatischer Carbonsäuren mit Alkanolaminen, ethoxylierte Amide aliphatischer Carbonsäuren mit Alkanolaminen und/oder polyalkoxylierten Organopolysiloxanen.
Bevorzugte nichtionische Emulgatoren sind Rizinusölethoxylate, Isotridecylalkoholpolyglykolether, Sorbitanester, Ethylenoxid-Propylenoxid-Blockcopolymere, Stearylalkoholethoxylate und Stearinsäureethoxylate.

Weitere bevorzugte Emulgatoren sind Alkoxysilylgruppen tragende Ethylenoxid-Propylenoxid-Blockcopolymere welche nach der Lehre der nicht vorveröffentlichten Schrift DE 10 2008 000360.3 hergestellt werden können.

Der/die amphotere(n) Emulgator(en) kann/können ausgewählt sein aus der Gruppe umfassend Amphoacetate, Amphodiacetate, Glycinate, Amphopropionate, Amphodipropionate, Hydroxysultaine, Aminoxide, Sulfobetaine und/oder Betaine.

Bevorzugte amphotere Emulgatoren sind Betaine und Aminoxide.

Die wässrige Phase der erfindungsgemäßen Emulsionen kann hydrophile Füllstoffe zur Modifizierung der (mechanischen) Eigenschaften von Beschichtungen auf Basis der erfindungsgemäßen Emulsionen enthalten. Vorteilhaft kann es sein, wenn die Oberfläche der eingesetzten Füllstoffe mindestens eine funktionelle Gruppe aufweist, so dass es nach Eintrocknen beziehungsweise Brechen der Emulsion zu chemischen Reaktionen zwischen reaktiven funktionellen Gruppen des erfindungsgemäß verwendbaren Präpolymers mit den funktionellen Gruppen auf der Partikeloberfläche kommt. Beispiele solcher Füllstoffe sind pyrogene und gefällte Kieselsäure, anorganische Oxide und Mischoxide wie Aluminiumoxid, Titandioxid und Zirkondioxid, Glas und Quarz, Hydroxide wie Aluminium-und Magnesiumhydroxid, Silicate wie Wollastonit, Glimmer, Kaolin und Talk, Calciumcarbonat und andere Carbonate, Metalle wie Kupfer, Zink und Nickel und Metalllegierungen, Nitride wie Bornitrid, Carbide wie Siliziumcarbid, Graphit und Ruß. Weitere Beispiele solcher Füllstoffe sind organische Partikel, wie zum Beispiel solche auf Basis von Zellulose, Lignin, oxydiertes Polyethylen oder ausgehärtetes Epoxidharz. Die Füllstoffe können entweder als Pulver oder als wässrige Dispersion während oder nach der Herstellung der Emulsion eingerührt werden. Kommerziell erhältliche Beispiele von solchen Dispersionen sind Aerodisp (Evonik Degussa), Ludox (W. R. Grace), Dispercoll (Bayer Materials Science) oder Klebosol (Clariant).
Des Weiteren kann die wässrige Phase Additive zur Modifizierung der rheologischen Eigenschaften der erfindungsgemäßen Emulsionen enthalten. Bevorzugte Beispiele solcher Additive sind Polyurethanverdicker, Xanthangummi, Guarkernmehl, Carboxymethylzellulose, Polyacrylate, Polyvinylalkohol, Polyvinylpyrrolidon, Carboxyvinylpolymere, Hydroxyethylzellulose und Polyethylenimine.
Zur Unterstützung und/oder Beschleunigung der Kondensationsreaktion können die erfindungsgemäßen Emulsionen Katalysatoren enthalten. Der Katalysator kann je nach Anwendungsbereich und physikalischen Eigenschaften gelöst beziehungsweise dispergiert entweder in der wässrigen Phase oder in dem Präpolymer eingesetzt werden. Insofern es sich um einen wasserunlöslichen Katalysator oder wasserunlösliche, Katalysator enthaltende Lösung handelt, kann der Katalysator oder die Katalysator enthaltende Lösung als separate Dispersion, Emulsion oder Mikroemulsion sowie als separater Feststoff oder Flüssigkeit zu der erfindungsgemäßen Emulsion gegeben werden. Insofern es sich um einen wasserlöslichen Katalysator oder wässerige, Katalysator enthaltende Lösung handelt kann der Katalysator oder die Katalysator enthaltende Lösung, gegebenenfalls mit Hilfe von entsprechenden Emulgatoren, in die Präpolymerphase eingearbeitet werden. Als Katalysatoren für die Aushärtung der erfindungsgemäßen alkoxysilylgruppentragenden Polyether(siloxane) können die bekannten Polyurethanisierungs-, Allophanatisierungs-oder Biuretisierungskatalysatoren verwendet werden, die dem Fachmann aus dem Stand der Technik bekannt sind. Hierzu zählen Verbindungen wie beispielsweise die Zinksalze Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat. Weiterhin können als Katalysatoren die üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc., verwendet werden. Des Weiteren können auch Bismutkatalysatoren, z.B. der Borchi-Katalysator, Titanate, z.B. Titan(IV)isopropylat, Eisen(III)-Verbindungen, z.B. Eisen(III)acetylacetonat, Aluminiumverbindungen, z.B. Aluminiumacetylacetonat, Calciumverbindungen, z.B. Calciumethylendiamintetraacetat, Magnesiumverbindungen, z.B. Magnesiumethylendiamintetraacetat oder auch Amine, z.B. Triethylamin, Tributylamin, 1,4-Diazabicyclo[2,2,2]octan, 1,8-Diazabicyclo[5.4.0]undec-7-en, 1,5-Diazabicyclo-[4.3.0]non-5-en , N, N-Bis-(N,N-dimethyl-2-aminoethyl)-methylamin, N , N-Dimethylcyclohexylamin, N, N-Dimethylphenylamin, N-Ethylmorpholin etc., eingesetzt werden. Auch organische oder anorganische Brönstedsäuren wie Methansulfonsäure, p-Toluolsulfonsäure, Dodecylbenzolsulfonsäure, 1-Naphthalinsulfonsäure, Camphersulfonsäure, Essigsäure, Trifluoressigsäure oder Benzoylchlorid, Salzsäure, Phoshorsäure, deren Mono- und/oder Diester, wie z.B. Butylphosphat, (Iso-)Propylphosphat, Dibutylphosphat etc., sind als Katalysatoren geeignet. Auch anorganische und organische Brönstedbasen wie z.B. Natriumhydroxid, Tetramethylammoniumhydroxid, Kaliumhydroxid, oder Tetrabutylammoniumhydroxid sind als Katalysatoren geeignet. Selbstverständlich können auch Kombinationen mehrerer Katalysatoren eingesetzt werden. Die erfindungsgemäßen härtbaren Modifizierungsmittel können auch sogenannte photolatente Basen als Katalysatoren enthalten, wie sie in der WO 2005/100482 beschrieben sind. Unter photolatenten Basen sind vorzugsweise organische Basen mit einem oder mehreren basischen Stickstoffatomen zu verstehen, die zunächst in einer blockierten Form vorliegen und erst nach Bestrahlung mit UV-Licht, sichtbarem Licht oder IR-Strahlung durch Spaltung des Moleküls die basische Form freisetzen.
Der Katalysator bzw. die photolatente Base wird in Mengen von 0,001 bis 5,0 Gew.-%, bevorzugt 0,01 bis 1,0 Gew.-% und besonders bevorzugt 0,05 bis 0,5 Gew.-% bezogen auf die alkoxysilylfunktionellen Präpolymere eingesetzt. Der Katalysator bzw. die photolatente Base kann in einer Portion oder aber auch portionsweise oder auch kontinuierlich zugegeben werden. Bevorzugt ist die Zugabe der gesamten Menge in einer Portion.
Des Weiteren kann die Präpolymerphase organofunktionelle und (teilweise) wasserunlösliche Silane zur weiteren Erhöhung der Vernetzungdichte enthalten. Die Silane können gegebenenfalls die Rolle eines Reaktivverdünners übernehmen. Solche organofunktionellen Silane sind zum Beispiel Tetraethoxysilan, Methyltriethoxysilan, N-Cyclohexylaminomethyltrimethoxysilan, N-Cyclohexyl-3-aminopropyltriethoxysilan, 3-Aminopropyltrimethoxysilan, Vinyltrimethoxysilan, Vinyltriethoxysilan, Vinyldimethoxymethylsilan, 3-Isocyanatopropyltrimethoxysilan, 3-Glycidyloxypropyltrimethoxysilan, 3-Glycidyloxypropyltriethoxysilan, 3-Methacryloxypropyltrimethoxysilan, Methyltrimethoxysilan, Methyltriethoxysilan, Dimethyldimethoxysilan, Phenyltriethoxysilan, Octyltrimethoxysilan, Octyltriethoxysilan, und Hexadecyltrimethoxysilan.

Des Weiteren kann die Präpolymerphase organofunktionelle und (teilweise) wasserunlösliche Siloxane enthalten. Solche organofunktionellen Siloxane sind zum Beispiel α,ω-Dihydroxypolydimethylsiloxane, α,ω-Bis-(Trimethoxysilyl)polydimethylsiloxane und α,ω-Bis-(Triethoxysilyl)-polydimethylsiloxane.

Des Weiteren können die Emulsionen auch aus der Literatur und dem Stand der Technik bekannte Hilfsstoffe zugesetzt werden. Dazu zählen beispielsweise filmbildende Poly(meth-)acrylate, Silikon/(Meth-)Acrylat-Copolymere, Poly-N-Acylalkylenimine, Poly-N-Methylpyrrolidone und Silikonharze mit fluorierten organischen Gruppen, Amino-oder Silanolgruppen. Weitere Beispiele sind antimikrobielle und konservierende Stoffe (z.B. Triclosan, Triclocarban, Hexachlorophen), Antioxidantien (z.B. BHA, BHT, Ascorbinsäure und γ-Orizanol), Dispergiermittel, Entschäumer und Entlüfter, Farbstoffe, Färbemittel und Pigmente, Frostschutzmittel (z.B. Ethanol, Ethylenglykol, 1,3-Butylenglykol, Propylenglykol, Glycerin oder Isopropanol), Fungizide, Haftvermittler und/oder Reaktivverdünner sowie Weichmacher (z.B. Phthalate, Benzoate, Phosphatweichmacher) und Komplexbildner (z.B EDTA, Zitronensäure und Etidronsäure sowie deren Salze). Auch Sprühhilfsmittel, Netzmittel, Vitamine, Wuchsstoffe, Hormone sowie Duftstoffe, Lichtschutzmittel, Radikalfänger, UV-Absorber (z.B. Benzophenonderivate, Benzotriazolderivate, Zimtsäureester oder partikuläre UV-Absorber wie beispielsweise ZnO oder TiO₂, sowie weitere Stabilisatoren können den Mischungen zugesetzt werden.
Die erfindungsgemäßen Präpolymeremulsionen können als Rohstoff für Lacke, Tinten, Trennmittel, Klebstoffe, kosmetische Produkte, kratzfeste Beschichtungen, Bautenschutzmittel, Korrosionsschutzmittel und/oder Dichtungsmassen eingesetzt werden, zur Beschichtung von Papier, Partikeln, Textil- und Glasfasern, zur Beschichtung von Füllstoffen für Papier, zur Erzeugung von Antistatikoberflächen und/oder als Ausgangsmaterial für die Herstellung von Gummiteilen z.B. auf der Basis von Polypropylenoxid-Kautschuk.

Die erfindungsgemäßen Emulsionen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

### Beispiele:

In den nachfolgenden Beispielen wird die Herstellung von Emulsionen auf Basis von silylfunktionalisierten Polyether(siloxane)n beschrieben. Diese silylfunktionalisierten Polyether(siloxane) sind gemäß dem in den noch nicht offengelegten Schriften DE 10 2008 000360.3 und DE 10 2008 044373.5 nach dem Verfahrensprinzip der DMC-katalysierten Alkoxylierung mit Propylenoxid (PO) und 3-Glycidyloxypropyltriethoxysilan (GlyEO) hergestellt worden. Die Viskosität der Präpolymeren bei 25,0 °C wurde gemessen bei 100 s⁻¹ mit einem Rotationsviskosimeter (Physica MCR301) und Kegel-Platte Geometrie.
Die Stabilität der Emulsionen wurde wie folgt beurteilt. Die Emulsion wurde bei Raumtemperatur gelagert und gilt als stabil gegen Aufrahmung und/oder Koaleszenz wenn innerhalb von einer Woche keine deutlichen Anzeichen von Instabilität vorhanden sind. Solche Anzeichen sind zum Beispiel die Bildung von mehreren Schichten oder deutlich sichtbare Fettaugen. Die Stabilität gegen Hydrolyse wurde beurteilt in dem der Alkanolgehalt der Emulsion sowohl direkt nach der Herstellung als auch nach einer Woche Lagerung mittels Gaschromatografie bestimmt wurde. Die Emulsion gilt als hydrolysestabil wenn der Alkanolgehalt unter 0,1% liegt, was gleichzeitig der Detektionsgrenze für den verwendeten Gaschromatograf (Model 6890, Firma Agilent) entspricht.

### Triethoxysilylpolyether I:

Polypropylenglykol-gestarteter und fast farbloser, weitgehend statistisch aufgebauter Polyether der mittleren Molmasse von ca. 9000 g/mol und vierfacher Trialkoxysilanfunktionalität.

Chemischer Aufbau gemäß Monomerendosage: PPG500 + 128,5 mol PO + 4 mol GLYEO

### Triethoxysilylpolyether II:

Polypropylenglykol-gestarteter und fast farbloser, weitgehend statistisch aufgebauter Polyether der mittleren Molmasse von ca. 16,000 g/mol und vierfacher Trialkoxysilanfunktionalität.

Chemischer Aufbau gemäß Monomerendosage:
PPG700 + 123 mol PO + 2 mol GLYEO + 123 mol PO + 2 mol GLYEO

### Triethoxysilylpolyethersiloxan III:

Polyethersiloxan-gestarteter und fast farbloser, weitgehend statistisch aufgebauter Polyether der mittleren Molmasse von ca. 9000 g/mol und vierfacher Trialkoxysilanfunktionalität. Das Polyethersiloxan wurde durch Hydrosilylierung von Heptamethyltrisiloxan (HMTS) an einem Poly(Ethylenoxid-stat-Propylenoxid)-Allylether mit einem Verhältnis Ethylenoxid zu Propylenoxid von 20 zu 80 hergestellt. Das Molekulargewicht des Polyethers betrug 880 Gramm pro Mol.

Chemischer Aufbau gemäß Monomerendosage:
Polyethersiloxan + 1,5 mol PO + 2 mol GLYEO + 1,5 mol PO

### Triethoxysilylpolyether IV:

Polypropylenglykol-gestarteter und fast farbloser, weitgehend statistisch aufgebauter Polyether der mittleren Molmasse von ca. 20000 g/mol und vierfacher Trialkoxysilanfunktionalität.

Chemischer Aufbau gemäß Monomerendosage: PPG700 + 212 mol PO + 4 mol GLYEO und 101,5 mol PO.

### Beispiel 1:

12,0 Gramm TEGO^{®} Alkanol S100P (Stearylalkohol, Polyoxyethylen (100) Ether, Evonik Goldschmidt GmbH), 3,0 Gramm TEGO^{®} Alkanol TD6 (Isotridecanol, Polyoxyethylen (6) Ether, Evonik Goldschmidt GmbH) und 15,0 Gramm Wasser wurden in einem Glasdoppelwandgefäß auf 60 °C aufgeheizt und mit einer Mizerscheibe bei 1000 U/Min gerührt, bis eine homogene, viskose Paste entstand. Unter Zuhilfenahme eines Tropftrichters wurde innerhalb von 30 Minuten 100,0 Gramm des Triethoxysilylpolyether IV tropfenweise in die Paste unter Rühren eingearbeitet. Die fertige Paste wurde 10 Minuten bei 1000 U/Min gerührt. Danach wurde die Paste mit den restlichen 200,0 Gramm Wasser verdünnt. Es entstand die Emulsion.

Die Tropfengrössenverteilung wurde mittels dynamischer Lichtstreuung (Malvern HPPS mit 633 nm HeNe-Laser) gemessen. Die Auswertung der Korrelationsfunktion mit dem CONTIN-Algorithmus ergab eine monomodale Tropfengrößenverteilung mit einem durchschnittlichen Radius von 154 nm.

Der Ethanolgehalt wurde mittels Gaschromatografie bestimmt. Sowohl direkt nach der Herstellung als nach 7 Tagen Lagerung bei Raumtemperatur lag der Gehalt unterhalb der Detektionsgrenze (0,1%). Die Emulsion zeigt nach einer Woche Lagerung bei Raumtemperatur keinerlei visuellen Anzeichen der Instabilität.

### Beispiel 2:

9,0 Gramm TEGO^{®} Alkanol TD12 (Isotridecylalkohol, Polyoxyethylen (12) Ether), 6,0 Gramm Rewopal^{®} LA3 (Laurylalkohol, Polyoxyethylen (3) Ether) und 20,0 Gramm Wasser wurden in einem Glasdoppelwandgefäß auf 60 °C aufgeheizt und mit einer Mizerscheibe bei 1000 U/Min gerührt, bis eine homogene, viskose Paste entstand. Unter Zuhilfenahme eines Tropftrichters wurde innerhalb von 30 Minuten eine homogene Lösung aus 20,0 Gramm Octyltriethoxysilan in 80,0 Gramm des Triethoxysilylpolyether I tropfenweise in die Paste unter Rühren eingearbeitet. Die fertige Paste wurde 10 Minuten bei 1000 U/Min gerührt. Danach wurde die Paste mit den restlichen 80,0 Gramm Wasser unter Rühren verdünnt. Es entstand die Emulsion. Die Tropfengrössenverteilung wurde gemessen mit dynamischer Lichtstreuung (Malvern HPPS). Der durchschnittliche Tropfenradius lag bei 116 nm.

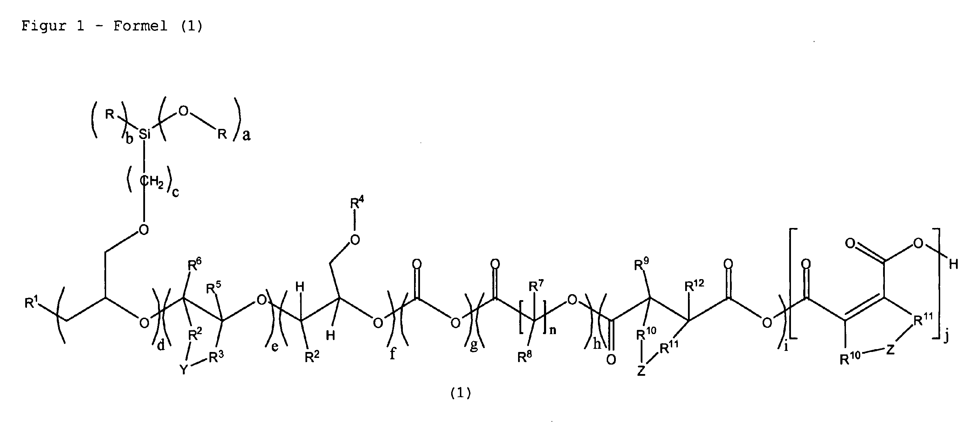

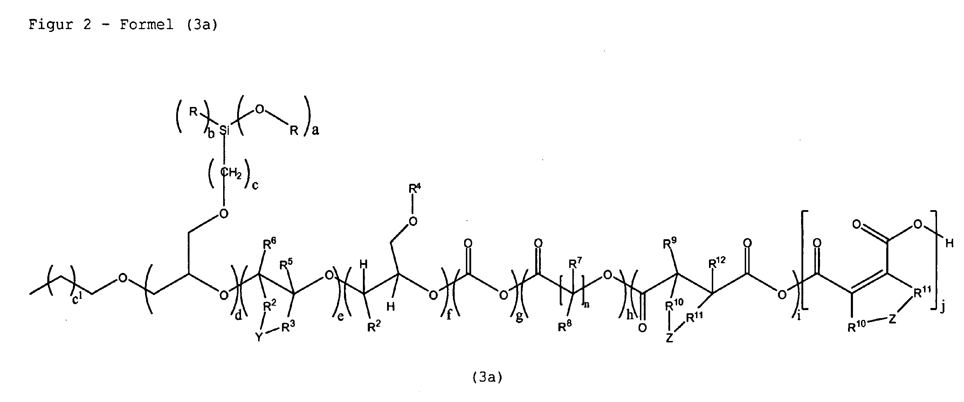

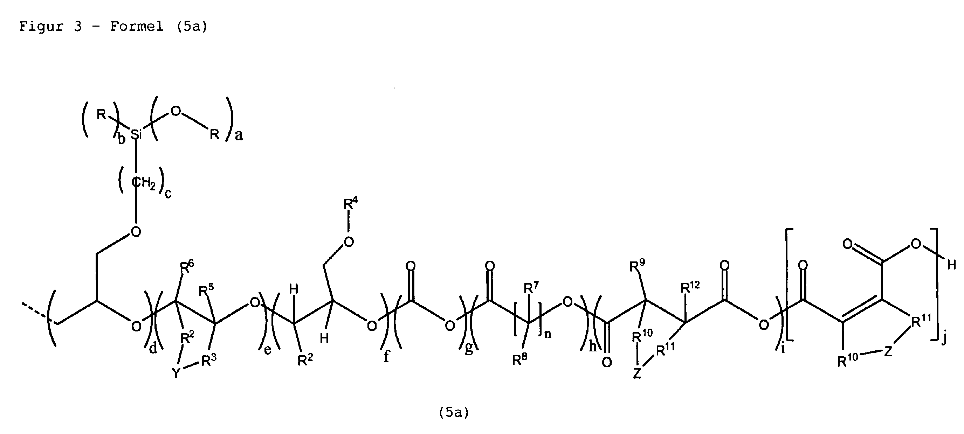

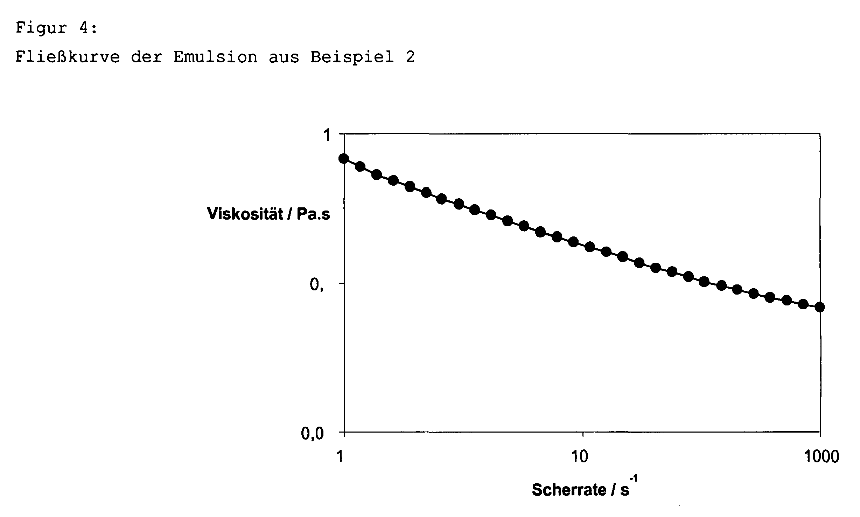

Mit einem Rotationsviskosimeter (Physica MCR301), ausgestattet mit Kegel-Platte Geometrie, wurde die Fließkurve der Emulsion gemessen. Die Fließkurve der Emulsion aus Beispiel 2 ist in Figur 4 dargestellt. Die Emulsion ist scherverdünnend. Die Viskosität bei 100 s⁻¹ liegt bei 0,18 Pa·s, d.h. deutlich unterhalb der Viskosität des verwendeten Präpolymers.

### Beispiel 3:

12,0 Gramm TEGO^{®} Alkanol S100P (Stearylalkohol, Polyoxyethylen (100) Ether, Evonik Goldschmidt GmbH), 3,0 Gramm TEGO^{®} Alkanol TD6 (Isotridecanol, Polyoxyethylen (6) Ether, Evonik Goldschmidt GmbH) und 15,0 Gramm Wasser wurden in einem Glasdoppelwandgefäß auf 60 °C aufgeheizt und mit einer Mizerscheibe bei 1000 U/Min gerührt, bis eine homogene, viskose Paste entstand. Unter Zuhilfenahme eines Tropftrichters wurde innerhalb von 30 Minuten 100,0 Gramm des Triethoxysilylpolyether III tropfenweise in die Paste unter Rühren eingearbeitet. Die fertige Paste wurde 10 Minuten bei 1000 U/Min gerührt. Danach wurde die Paste mit den restlichen 85,0 Gramm Wasser unter Rühren verdünnt. Es entstand die Emulsion. Die Tropfengrössenverteilung wurde gemessen mit dynamischer Lichtstreuung (Malvern HPPS). Der durchschnittliche Tropfenradius lag bei 122 nm. Anschließend wurde 10,0 Gramm Aerosil A200 zu der fertigen Emulsion gegeben und eindispergiert durch Rühren bei 2000 U/Min während 10 Minuten.

### Beispiel 4:

10,0 Gramm Marlon^{®} A315 (Dodecylbenzolsulfonat, Na-Salz, Sasol Germany GmbH), 15,0 Gr TEGO^{®} Betain F50 (Cocamidopropylbetain, Evonik Goldschmidt GmbH), 7,5 Gramm TEGO^{®} Alkanol TD6 (Isotridecanol, Polyoxyethylen (6) Ether, Evonik Goldschmidt GmbH) wurden bei Raumtemperatur in einem Kunststoffbecher mit einer Mizerscheibe bei 1000 U/Min gerührt, bis eine homogene, viskose Paste entstand. Unter Zuhilfenahme eines Tropftrichters wurde innerhalb von 30 Minuten 100,0 Gramm des Triethoxysilylpolyether III tropfenweise in die Paste unter Rühren eingearbeitet. Die fertige Paste wurde 10 Minuten bei 1000 U/Min gerührt. Danach wurde die Paste mit 100,0 Gramm Wasser unter Rühren verdünnt. Es entstand die Emulsion. Die Tropfengrössenverteilung wurde gemessen mit dynamischer Lichtstreuung (Malvern HPPS). Der durchschnittliche Tropfenradius lag bei 144 nm.

### Beispiel 5:

30,0 Gramm Synperonic^{®} PE/F108 (25%ige wässrige Lösung eines EO-PO-EO Triblockcopolymers, Croda) und 7,5 Gramm Pluronic^{®} PE10300 (EO-PO-EO Triblockcopolymer, BASF) wurden bei Raumtemperatur in einem Kunststoffbecher mit einer Mizerscheibe bei 1000 U/Min gerührt, bis eine homogene, viskose Paste entstand. Unter Zuhilfenahme eines Tropftrichters wurde innerhalb von 30 Minuten 100,0 Gramm des Triethoxysilylpolyether IV tropfenweise in die Paste unter Rühren eingearbeitet. Die fertige Paste wurde 10 Minuten bei 1000 U/Min gerührt. Danach wurde die Paste mit 162,5 Gramm Wasser unter Rühren verdünnt. Es entstand die Emulsion. Die Tropfengrössenverteilung wurde gemessen mit dynamischer Lichtstreuung (Malvern HPPS). Der durchschnittliche Tropfenradius lag bei 251 nm, wobei ein gewisser Grobanteil (Tropfenradius > 1 Mikrometer) erkennbar war.

Der Ethanolgehalt wurde mittels Gaschromatografie bestimmt. Sowohl direkt nach der Herstellung als nach 7 Tagen Lagerung bei Raumtemperatur lag der Gehalt unterhalb der Detektionsgrenze (0,1%). Die Emulsion zeigt nach einer Woche Lagerung bei Raumtemperatur trotz Grobanteil keine visuellen Anzeichen der Instabilität.

## Patentansprüche

1. Stabile, hydrolysebeständige wässrige Emulsionen enthaltend silylfunktionalisierte Polyether und/oder silylfunktionalisierte Polyethersiloxane mit jeweils mindestens einer nicht-terminalen Silylfunktion im Molekül, **dadurch gekennzeichnet, dass** als silylfunktionalisierte Polyether Verbindungen der Formel (1) 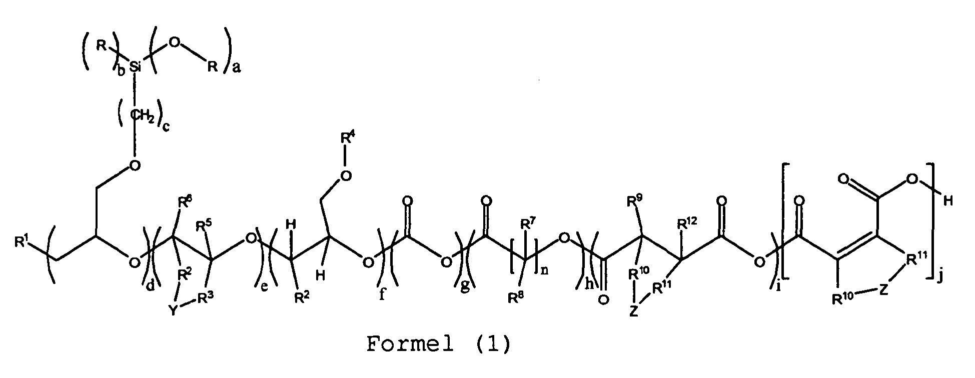 wobei
a eine ganze Zahl von 1 bis 3 ist,
b eine ganze Zahl von 0 bis 2 ist,
und die Summe von a und b gleich 3 ist,
c eine ganze Zahl von 0 bis 22 ist,
d eine ganze Zahl von 1 bis 1.000 ist,
e eine ganze Zahl von 0 bis 10.000 ist,
f eine ganze Zahl von 0 bis 1.000 ist,
g eine ganze Zahl von 0 bis 1.000 ist,
h, i und j ganze Zahlen von 0 bis 500 ist, und mit der Maßgabe, dass die Fragmente mit den Indices d bis j untereinander frei permutierbar, d.h. in der Sequenz innerhalb der Polyetherkette gegeneinander austauschbar sind
n eine ganze Zahl zwischen 2 und 8 ist und
R einen oder mehrere gleiche oder verschiedene Reste, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen darstellt,
und
R¹ gleich einem gesättigten oder ungesättigten, gegebenenfalls verzweigten Rest, oder einen Polyetherrest vom Typ einer Alkoxy-, Arylalkoxy-oder Alkylarylalkoxygruppe darstellt, bei der die Kohlenstoffkette durch Sauerstoffatome unterbrochen sein kann, oder eine ggf. einfach oder mehrfach annelierte aromatische Aryloxy-Gruppe ist, oder eine siliciumhaltige Verbindung oder ein Siloxanrest oder (Poly)siloxanrest ist, der alkyl- und/oder arylgruppensubstituiert sein kann,
R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind, wobei der Kohlenwasserstoffrest cycloaliphatisch über das Fragment Y verbrückt sein kann; Y kann nicht vorhanden sein, oder aber eine Methylenbrücke mit 1 oder 2 Methyleneinheiten sein, ist Y nicht vorhanden, so sind R² oder R³ unabhängig voneinander gleich ein linearer oder verzweigter Rest mit 1 bis 20 Kohlenstoffatomen,
R⁴ entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann,
R⁷ und R⁸ sind unabhängig voneinander entweder Wasserstoff, Alkyl-, Alkoxy-, Aryl- oder Aralkylgruppen, die unter Ringöffnungspolymerisation zu vernetzbaren, Alkoxysilangruppen enthaltenden Polyetherestern copolymerisiert werden,
R⁹, R¹⁰, R¹¹ und R¹² sind unabhängig voneinander entweder Wasserstoff, Alkyl-, Alkenyl-, Alkoxy-; Aryl- oder Aralkylgruppen wobei der Kohlenwasserstoffrest cycloaliphatisch oder aromatisch über das Fragment Z verbrückt sein kann und Z sowohl einen divalenten Alkylen- als auch Alkenylenrest darstellen kann,
allein oder im Gemisch miteinander verwendet werden.

2. Emulsionen nach Anspruch 1, **dadurch gekennzeichnet, dass** Zusammensetzungen enthalten sind, in denen die Summe der Indices (a) plus (b) in Formel (1) im statistischen Mittel kleiner als 3 ist, da durch Umesterungsreaktionen ein Teil der OR-Gruppen durch Silylpolyethergruppen ersetzt wird.

3. Emulsionen nach Anspruch 1 oder 2 **dadurch gekennzeichnet, dass** R1 ein (Poly-)Siloxanrest ist.

4. Emulsionen nach Anspruch 3 **dadurch gekennzeichnet, dass** als (Poly-)Siloxanrest enthaltende Verbindung ein alkoxysilylfunktionelles Polyethersiloxan gemäß Formel (3) und deren Mischungen verwendet wird, 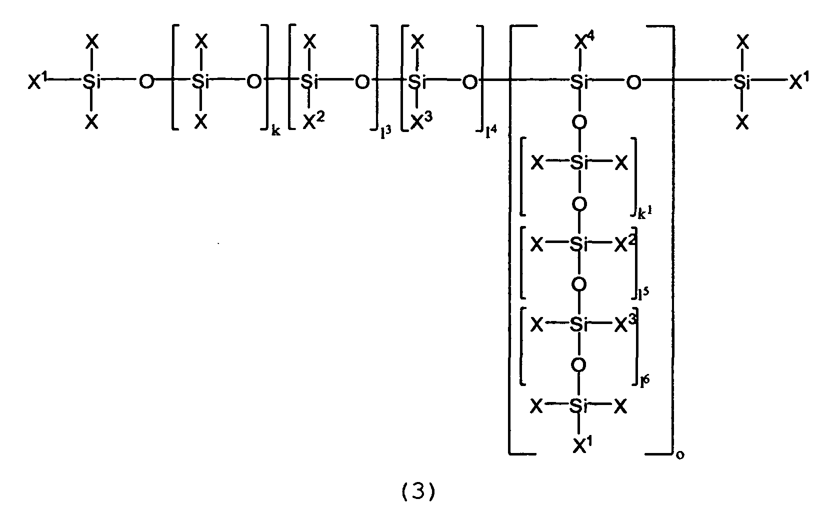 wobei
X ein linearer, cyclischer oder verzweigter, aliphatischer oder aromatischer, gesättigter oder ungesättigter Kohlenwasserstoffrest mit 1 bis 20 C-Atomen ist, der Heteroatome wie Sauerstoff, Stickstoff, Phosphor oder Schwefel enthalten kann,
X¹ wahlweise X, X² oder X³ ist,
x² ein Alkoxysilylgruppen tragender OH-funktioneller Polyoxyalkylenrest der Formel (3a) ist, der Ester- oder Carbonat-modifiziert sein kann, 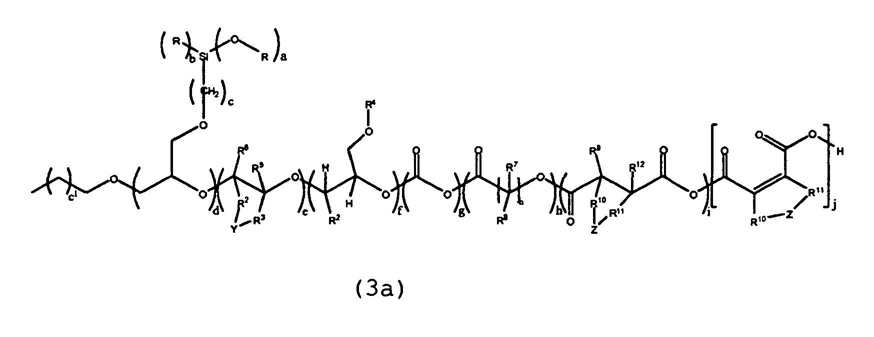
X³ ein endständig veretherter Polyoxyalkylenrest der Formel (3b) ist, 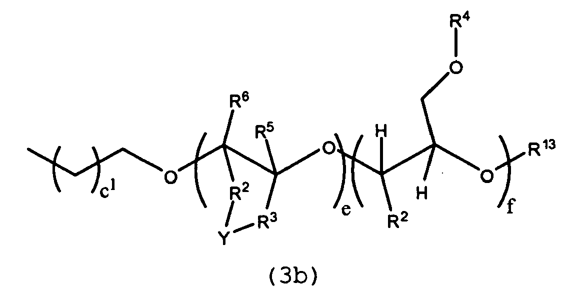
wobei
R einen oder mehrere gleiche oder verschiedene Reste, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen darstellt,
R² oder R³, sowie R⁵ oder R⁶ gleich oder unabhängig voneinander H oder ein gesättigter oder gegebenenfalls einfach oder mehrfach ungesättigter, auch weiter substituierter, gegebenenfalls ein- oder mehrwertiger Kohlenwasserstoffrest sind, wobei für die Reste R⁵ oder R⁶ gilt, dass sie gleich einem einwertigen Kohlenwasserstoffrest sind und der Kohlenwasserstoffrest cycloaliphatisch über das Fragment Y verbrückt sein kann; Y kann nicht vorhanden sein, oder aber eine Methylenbrücke mit 1 oder 2 Methyleneinheiten sein; ist Y gleich 0, so sind R² oder R³ unabhängig voneinander gleich ein linearer oder verzweigter Rest mit 1 bis 20 Kohlenstoffatomen; die Kohlenwasserstoffreste R² und R³ können ihrerseits weiter substituiert sein und funktionelle Gruppen wie Halogene, Hydroxylgruppen oder Glycidyloxypropylgruppen tragen; R⁴ ist ein linearer oder verzweigter Alkylrest von 1 bis 18 Kohlenstoffatomen, der an einen aromatischen oder cycloaliphatischen Rest gebunden sein kann,
R⁷ und R⁸ sind unabhängig voneinander entweder Wasserstoff, Alkyl-, Alkoxy-, Aryl- oder Aralkylgruppen,
R⁹, R¹⁰, R¹¹ und R¹² sind unabhängig voneinander entweder Wasserstoff, Alkyl-, Alkenyl-, Alkoxy-, Aryl- oder Aralkylgruppen, wobei der Kohlenwasserstoffrest cycloaliphatisch oder aromatisch über das Fragment Z verbrückt sein kann, wobei Z sowohl einen divalenten Alkylenals auch Alkenylenrest darstellen kann;
R¹³ ist wahlweise eine Alkylgruppe mit 1 bis 18 C-Atomen, oder ein mit einer monofunktionellen Carbonsäure endständig veresterter Polyoxyalkylenrest der Formel (3c), 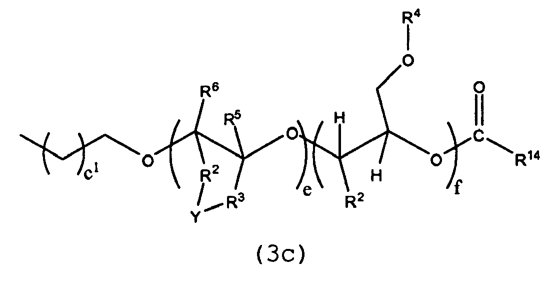
wobei
R¹⁴ ein gesättigter oder ein ein- oder mehrfach ungesättigter, entweder linearer oder verzweigter, aliphatischer oder aromatischer Kohlenwasserstoffrest mit 1-30 Kohlenstoffatomen ist, der seinerseits OH-Gruppen tragen kann, und X⁴ entweder X¹ oder dem Fragment der Formel (3d) entspricht, 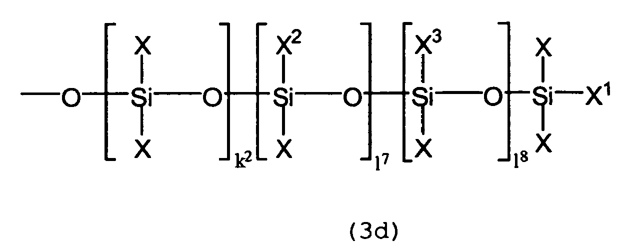
wobei
k, k¹ und k² unabhängig voneinander ganze Zahlen von 0 bis 500 sind,
1³, 1⁴, 1⁵, 1⁶, l⁷ und 1⁸ unabhängig voneinander ganze Zahlen von 0 bis 60 sind,
o eine ganze Zahl von 0 bis 10 ist,
mit der Maßgabe, dass
X¹ mindestens einmal gleich X² ist, falls die Summe aus 1³, 1⁵ und 1⁷ Null ist, und dass die Summe aus 1³, 1⁵ und 1⁷ mindestens 1 ist, wenn X¹ ungleich X² ist,
wobei
a eine ganze Zahl von 1 bis 3 ist,
b eine ganze Zahl von 0 bis 2 ist, die Summe von a und b gleich 3 ist,
c eine ganze Zahl von 0 bis 22 ist,
c¹ eine ganze Zahl von 0 bis 24 ist,
d eine ganze Zahl von 1 bis 500 ist,
e eine ganze Zahl von 0 bis 5000 ist,
n eine ganze Zahl von 2 bis 8 ist und
f, g, h, i und j jeweils ganze Zahlen von 0 bis 5.00 sind,
mit der Maßgabe, dass die Fragmente mit den Indices d bis j untereinander frei permutierbar, in der Sequenz innerhalb der Polyetherkette gegeneinander austauschbar sind und wobei die verschiedenen Monomereinheiten der Fragmente mit den Indexzahlen d bis j untereinander blockweise aufgebaut sein oder aber auch einer statistischen Verteilung unterliegen können und mit der Maßgabe, dass die Fragmente mit den Indices k, k¹, k², l³, l⁴, l⁵, l⁶, l⁷, l⁸ und o untereinander frei permutierbar, innerhalb der Siloxankette gegeneinander austauschbar sind und wahlweise statistisch verteilt oder blockartig aneinandergereiht vorliegen können.

5. Emulsionen nach zumindest einem der vorstehenden Ansprüche, **dadurch gekennzeichnet, dass** lineare Polyether-Siloxan-Polyether-Triblockcopolymere der Formel (5) enthalten sind, bei denen die mit Alkoxysilylgruppen ausgestatteten Polyetherketten über eine Si-O-C-Verknüpfung, an den Siloxankörper gebunden sind, 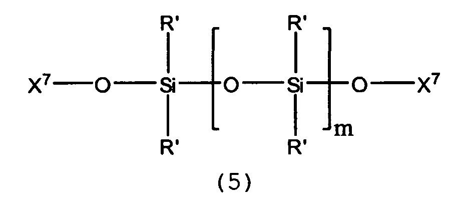 wobei
R' einem oder mehreren gleichen oder verschiedenen linearen oder verzweigten, gesättigten, einfach oder mehrfach ungesättigten Alkylresten mit 1 bis 20 Kohlenstoffatomen entspricht, und
m eine ganze Zahl von 0 bis 5000 ist, und
X⁷ dem Polyetherfragment der Formel (5a) entspricht, 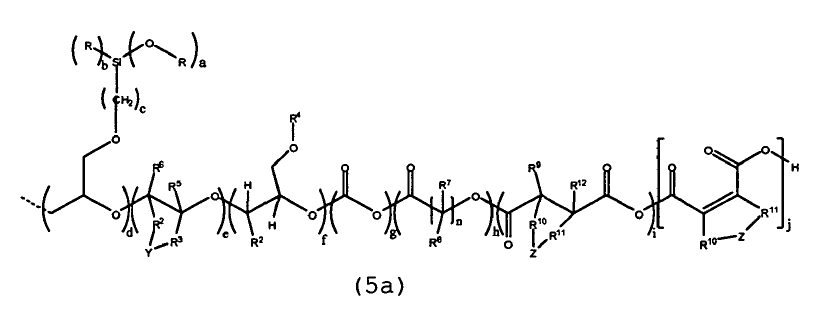
wobei die Substituenten R, R²-R¹², die Reste Y und Z sowie die Indizes a, b, c, d, e, f, g, h, i, j und n den zuvor für die Verbindungen der Formel (3a) genannten Definitionen entsprechen und die durch Formel (3) beschriebenen Polyethersiloxane die gegebenenfalls prozessbedingt enthaltenen Nebenprodukte wie freie Überschusspolyether oder Umlagerungsprodukte mit einschließen.

6. Emulsionen nach einem der Ansprüche 1, 4 oder 5, **dadurch gekennzeichnet, dass** Verbindungen der Formeln (1), (5) und/oder (6) allein oder im Gemisch miteinander verwendet werden.

7. Emulsionen nach zumindest einem der Ansprüche 1 bis 6, **dadurch gekennzeichnet, dass** als Emulgatoren anionische, nicht-ionische, kationische und amphotere Emulgatoren sowie Emulgatormischungen verwendet werden.

8. Emulsionen nach zumindest einem der Ansprüche 1 bis 7, **dadurch gekennzeichnet, dass** die Emulsionen Verbindungen ausgewählt aus den Gruppen der Katalysatoren, photolatente Basen, Additive zur Modifizierung der rheologischen Eigenschaften, hydrophile Füllstoffe, organofunktionelle und/oder teillösliche und/oder wasserunlösliche Silane und/oder Siloxane, Hilfsstoffe, filmbildende Stoffe, antimikrobielle und konservierende Stoffe, Dispergiermittel, Entschäumer und Entlüfter, Farbstoffe, Färbemittel und Pigmente, Frostschutzmittel Fungizide, Haftvermittler und/oder Reaktivverdünner, Weichmacher und Komplexbildner, Sprühhilfsmittel, Netzmittel, Vitamine, Wuchsstoffe, Hormone und/oder Duftstoffe, Lichtschutzmittel, Radikalfänger, UV-Absorber, weitere Stabilisatoren enthalten.

9. Verwendung der Emulsionen nach zumindest einem der Ansprüche 1 bis 8 als Rohstoffe für Lacke, Tinten, Trennmittel, Klebstoffe, kosmetische Produkte, kratzfeste Beschichtungen, Bautenschutzmittel, Korrosionsschutzmittel und/oder Dichtungsmassen, zur Beschichtung von Papier, Partikeln, Textil- und Glasfasern, zur Beschichtung von Füllstoffen für Papier, zur Erzeugung von Antistatikoberflächen und/oder als Ausgangsmaterial für die Herstellung von Gummiteilen auf der Basis von Polypropylenoxid.

## Claims

1. Stable, hydrolysis-resistant aqueous emulsions comprising silyl-functionalized polyethers and/or silyl-functionalized polyethersiloxanes having in each case at least one nonterminal silyl function in the molecule, **characterized in that** use is made as silyl-functionalized polyethers, alone or in a mixture with one another, of compounds of the formula (1) 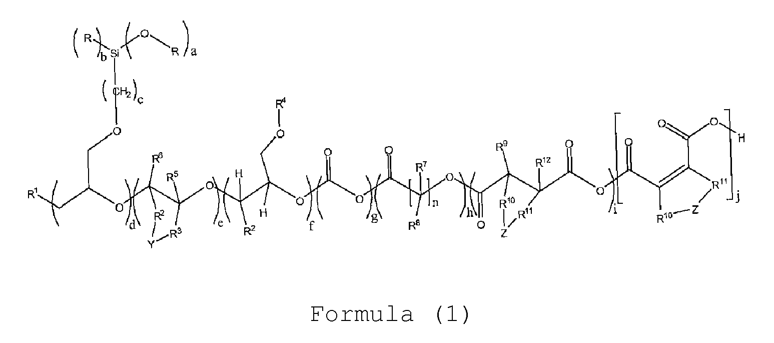 where
a is an integer from 1 to 3,
b is an integer from 0 to 2,
and the sum of a and b is 3,
c is an integer from 0 to 22,
d is an integer from 1 to 1000,
e is an integer from 0 to 10 000,
f is an integer from 0 to 1000,
g is an integer from 0 to 1000,
h, i, and j are integers from 0 to 500, and with the proviso that the fragments with the indices d to j are freely permutable with one another, i.e., are interchangeable with one another in the sequence within the polyether chain,
n is an integer between 2 and 8, and
R represents one or more identical or different radicals selected from linear or branched, saturated, singularly or multiply unsaturated alkyl radicals having 1 to 20 carbon atoms or haloalkyl groups having 1 to 20 carbon atoms,
and
R¹ is a saturated or unsaturated, optionally branched radical, or a polyether radical of the type of an alkoxy, arylalkoxy or alkylarylalkoxy group, in which the carbon chain may be interrupted by oxygen atoms, or is an optionally singularly or multiply fused aromatic aryloxy group, or is a silicon-containing compound or a siloxane radical or (poly)siloxane radical which may be alkyl-and/or aryl-group-substituted,
R² or R³, and also R⁵ or R⁶, identically or else independently of one another are H or a saturated or optionally singularly or multiply unsaturated, also further-substituted, optionally monovalent or polyvalent hydrocarbon radical, it being the case for the radicals R⁵ or R⁶ that they are a monovalent hydrocarbon radical, it being possible for the hydrocarbon radical to be bridged cycloaliphatically via the fragment Y; Y may not be present, or else may be a methylene bridge having 1 or 2 methylene units - if Y is not present, then R² or R³ independently of one another are a linear or branched radical having 1 to 20 carbon atoms,
R⁴ corresponds to a linear or branched alkyl radical of 1 to 24 carbon atoms or to an aromatic or cycloaliphatic radical which may optionally in turn carry alkyl groups,
R⁷ and R⁸ are, independently of one another, alternatively hydrogen or alkyl, alkoxy, aryl or aralkyl groups which are copolymerized by ring-opening polymerization to give crosslinkable polyether esters containing alkoxysilane groups,
R⁹ R¹⁰, R¹¹ and R¹² are, independently of one another, alternatively hydrogen or alkyl, alkenyl, alkoxy, aryl or aralkyl groups, it being possible for the hydrocarbon radical to be bridged cycloaliphatically or aromatically via the fragment Z, and for Z to be a divalent alkylene radical or an alkenylene radical.

2. Emulsions according to Claim 1, **characterized in that** compositions are present in which the sum of the indices (a) plus (b) in formula (1) is on average less than 3, since some of the OR groups are replaced by silyl polyether groups as a result of transesterification reactions.

3. Emulsions according to Claim 1 or 2, **characterized in that** R¹ is a (poly)siloxane radical.

4. Emulsions according to Claim 3, **characterized in that** use is made, as compound containing (poly)siloxane radical, of an alkoxysilyl-functional polyethersiloxane of formula (3) and mixtures thereof 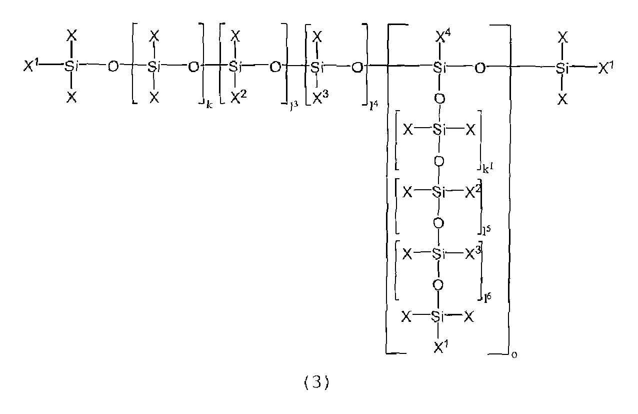 where
X is a linear, cyclic or branched, aliphatic or aromatic, saturated or unsaturated hydrocarbon radical having 1 to 20 C atoms, which may comprise heteroatoms such as oxygen, nitrogen, phosphorus or sulfur,
X¹ is alternatively X, X² or X³,
X² is an OH-functional polyoxyalkylene radical of the formula (3a) which carries alkoxysilyl groups and which may be ester- or carbonate-modified, 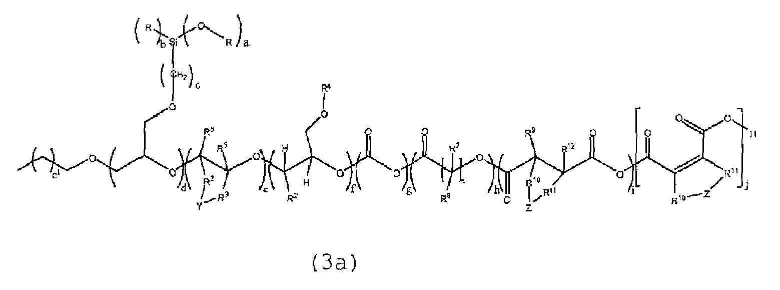
X³ is a terminally etherified polyoxyalkylene radical of the formula (3b) 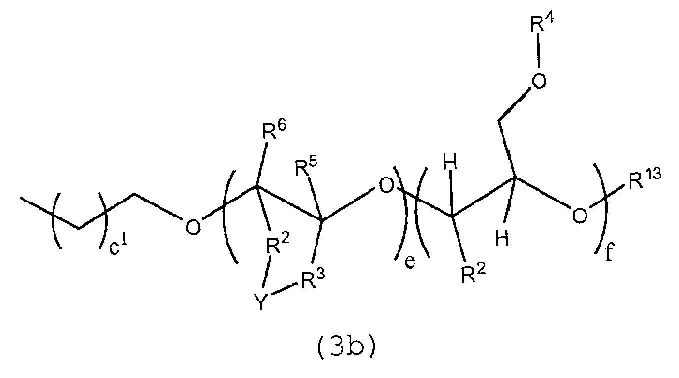
where
R represents one or more identical or different radicals selected from linear or branched, saturated, singularly or multiply unsaturated alkyl radicals having 1 to 20 carbon atoms or haloalkyl groups having 1 to 20 carbon atoms,
R² or R³, and also R⁵ or R⁶, identically or else independently of one another are H or a saturated or optionally singularly or multiply unsaturated, also further-substituted, optionally monovalent or polyvalent hydrocarbon radical, it being the case for the radicals R⁵ or R⁶ that they are a monovalent hydrocarbon radical, it being possible for the hydrocarbon radical to be bridged cycloaliphatically via the fragment Y; Y may not be present, or else may be a methylene bridge having 1 or 2 methylene units - if Y is 0, then R² or R³ independently of one another are a linear or branched radical having 1 to 20 carbon atoms; the hydrocarbon radicals R² and R³ may in turn be further substituted and may carry functional groups such as halogens, hydroxyl groups or glycidyloxypropyl groups; R⁴ is a linear or branched alkyl radical having 1 to 18 carbon atoms, which may be attached to an aromatic or cycloaliphatic radical,
R⁷ and R⁸ independently of one another are alternatively hydrogen or alkyl, alkoxy, aryl or aralkyl groups,
R⁹, R¹⁰, R¹¹, and R¹² are, independently of one another, alternatively hydrogen or alkyl, alkenyl, alkoxy, aryl or aralkyl groups, it being possible for the hydrocarbon radical to be bridged cycloaliphatically or aromatically via the fragment Z, and for Z to represent either a divalent alkylene radical or alkenylene radical;
R¹³ is alternatively an alkyl group having 1 to 18 C atoms or a polyoxyalkylene radical of the formula (3c) which is terminally esterified with a monofunctional carboxylic acid, 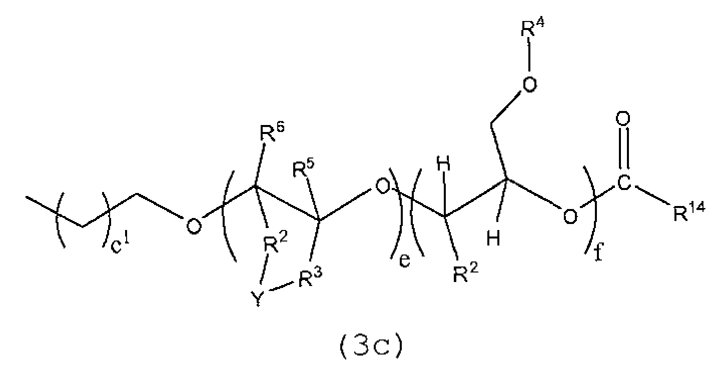
where
R¹⁴ is a saturated or a singularly or multiply unsaturated, either linear or branched, aliphatic or aromatic hydrocarbon radical having 1-30 carbon atoms, which in turn may carry OH groups, and X⁴ is either X¹ or the fragment of the formula (3d), 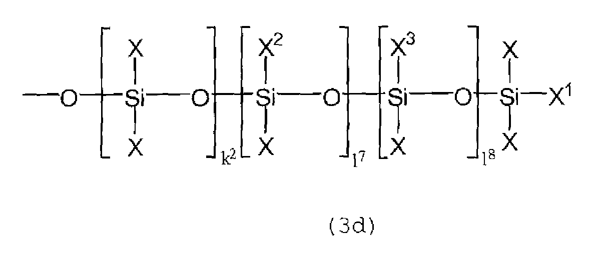
where
k, k¹, and k² independently of one another are integers from 0 to 500,
1³, 1⁴, 1⁵, 1⁶, 1⁷, and 1⁸ independently of one another are integers from 0 to 60,
○ is an integer from 0 to 10, with the proviso that
X¹ is at least once X² if the sum of 1³, 1⁵, and 1⁷ is zero, and that the sum of 1³, 1⁵, and 1⁷ is at least one if X¹ is other than X²,
where
a is an integer from 1 to 3,
b is an integer from 0 to 2, the sum of a and b being 3,
c is an integer from 0 to 22,
c¹ is an integer from 0 to 24,
d is an integer from 1 to 500,
e is an integer from 0 to 5000,
n is an integer from 2 to 8, and
f, g, h, i, and j are each integers from 0 to 500, with the proviso that the fragments with the indices d to j are freely permutable with one another, being interchangeable with one another in the sequence within the polyether chain, and where the various monomer units of the fragments with the index numbers d to j may be constructed blockwise with one another or else may be subject to a statistical distribution, and with the proviso that the fragments with the indices k, k¹, k², 1³, 1⁴, 1⁵, 1⁶, 1⁷, 1⁸, and O are freely permutable with one another, being interchangeable with one another within the siloxane chain, and may be present alternatively with statistical distribution or with blocklike sequencing.

5. Emulsions according to at least one of the preceding claims, **characterized in that** linear polyether-siloxane-polyether triblock copolymers of the formula (5) are present in which the polyether chains furnished with alkoxysilyl groups are attached via an Si-O-C linkage to the siloxane structure, 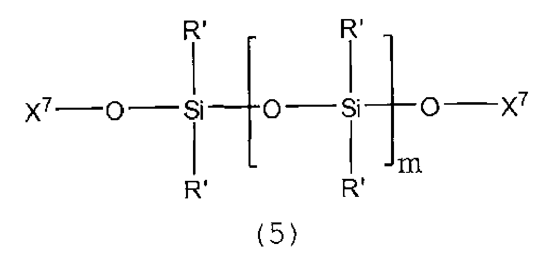 where
R' corresponds to one or more identical or different linear or branched, saturated, singularly or multiply unsaturated alkyl radicals having 1 to 20 carbon atoms, and
m is an integer from 0 to 5000, and
X⁷ corresponds to the polyether fragment of the formula (5a) , 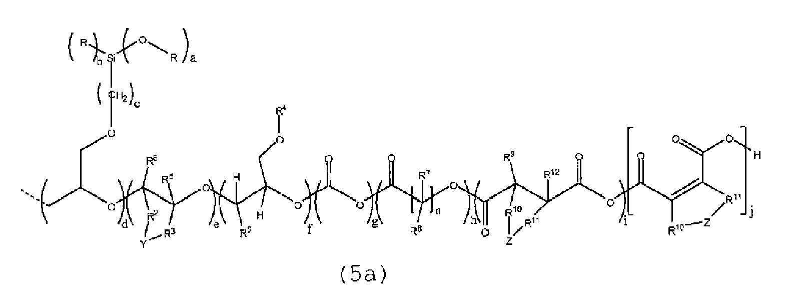
where the substituents R, R²-R¹², the radicals Y and Z, and the indices a, b, c, d, e, f, g, h, i, j, and n correspond to the definitions stated above for the compounds of the formula (3a), and the polyethersiloxanes described by formula (3) include the byproducts which may be present as a concomitant of the procedure, such as free excess polyethers or rearrangement products.

6. Emulsions according to any of Claims 1, 4, and 5, **characterized in that** compounds of the formulae (1), (5) and/or (6) are used alone or in a mixture with one another.

7. Emulsions according to at least one of Claims 1 to 6, **characterized in that** emulsifiers used are anionic, nonanionic, cationic, and amphoteric emulsifiers and also emulsifier mixtures.

8. Emulsions according to at least one of Claims 1 to 7, **characterized in that** the emulsions comprise compounds selected from the groups of catalysts, photolatent bases, additives for modifying the rheological properties, hydrophilic fillers, organofunctional and/or partially soluble and/or water-insoluble silanes and/or siloxanes, auxiliaries, film-formers, antimicrobial and preservative substances, dispersants, defoamers and deaerating agents, dyes, colorants, and pigments, antifreeze agents, fungicides, adhesion promoters and/or reactive diluents, plasticizers and complexing agents, spraying assistants, wetting agents, vitamins, growth substances, hormones and/or fragrances, light stabilizers, free-radical scavengers, UV absorbers, further stabilizers.

9. Use of the emulsions according to at least one of Claims 1 to 8 as raw materials for paints, inks, release agents, adhesives, cosmetic products, scratch-resistant coatings, architectural preservatives, corrosion inhibitors and/or sealants, for the coating of paper, particles, textile fibers, and glass fibers, for the coating of fillers for paper, for producing antistatic surfaces and/or as starting material for producing rubber parts based on polypropylene oxide.

## Revendications

1. Émulsions aqueuses stables, résistantes à l'hydrolyse, contenant des polyéthers à fonctionnalisation silyle et/ou des polyéthersiloxanes à fonctionnalisation silyle, comportant chacun au moins une fonction silyle non terminale dans la molécule, **caractérisées en ce qu'**on utilise comme polyéthers à fonctionnalisation silyle des composés de formule (1) 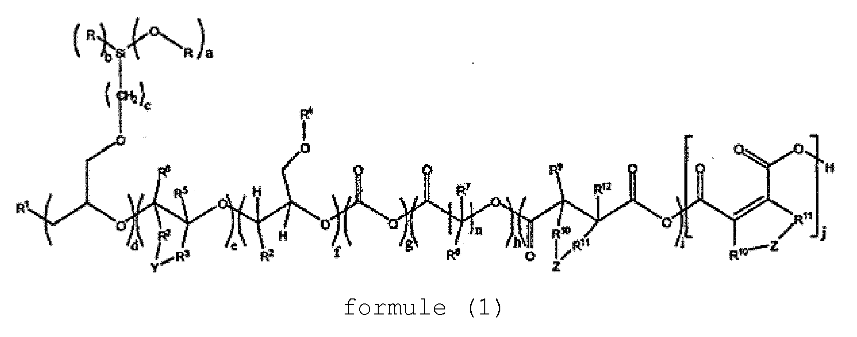 dans laquelle
a est un nombre entier valant de 1 à 3,
b est un nombre entier valant de 0 à 2, et la somme de a et b est égale à 3,
c est un nombre entier valant de 0 à 22,
d est un nombre entier valant de 1 à 1 000,
e est un nombre entier valant de 0 à 10 000,
f est un nombre entier valant de 0 à 1 000,
g est un nombre entier valant de 0 à 1 000,
h, i et j sont des nombres entiers valant de 0 à 500,
et étant entendu que les fragments avec les indices d à j sont librement permutables entre eux, c'est-à-dire remplaçables les uns par les autres dans la séquence à l'intérieur de la chaîne polyéther
n est un nombre entier compris entre 2 et 8 et
R représente un ou plusieurs radicaux identiques ou différents, choisis parmi des radicaux alkyle linéaires ou ramifiés, une ou plusieurs fois insaturés, ayant de 1 à 20 atomes de carbone, ou des groupes halogénoalkyle ayant de 1 à 20 atomes de carbone,
et
R¹ représente un radical saturé ou insaturé, éventuellement ramifié, ou un radical polyéther du type d'un groupe alcoxy, arylalcoxy ou alkylarylalcoxy, dans lequel la chaîne carbonée peut être interrompue par des atomes d'oxygène, ou un groupe aryloxy aromatique éventuellement une ou plusieurs fois condensé, ou est un composé silicié ou un radical siloxane ou un radical (poly)siloxane qui peut être substitué par des groupes alkyle et/ou aryle,
R² ou R³, ainsi que R⁵ ou R⁶, identiques ou bien chacun indépendamment, représentent H ou un radical hydrocarboné saturé ou éventuellement une ou plusieurs fois insaturé, également substitué davantage, éventuellement mono- ou plurivalent, étant entendu qu'en ce qui concerne les radicaux R⁵ ou R⁶ il s'agit d'un radical hydrocarboné monovalent, le radical hydrocarboné pouvant être ponté en un radical cycloaliphatique par le fragment Y ; Y peut ne pas être présent, ou bien être un pont méthylène comportant 1 ou 2 unités méthylène, si Y n'est pas présent, R² ou R³ représentent indépendamment l'un de l'autre un radical linéaire ou ramifié ayant de 1 à 20 atomes de carbone,
R⁴ correspond à un radical alkyle linéaire ou ramifié ayant de 1 à 24 atomes de carbone ou à un radical aromatique ou cycloaliphatique, qui peut éventuellement pour sa part porter des groupes alkyle,
R⁷ et R⁸ représentent, indépendamment l'un de l'autre, soit un atome d'hydrogène, soit des groupes alkyle, alcoxy, aryle ou aralkyle, qui sont copolymérisés par polymérisation avec ouverture de cycle en polyétheresters réticulables, contenant des groupes alcoxysilane,
R⁹, R¹⁰ , R¹¹ et R¹² représentent, indépendamment les uns des autres, soit un atome d'hydrogène, soit des groupes alkyle, alcényle, alcoxy, aryle ou aralkyle, le radical hydrocarboné pouvant être ponté en un radical cycloaliphatique ou aromatique par le fragment Z et Z pouvant représenter aussi bien un radical alkylène divalent qu'un radical alcénylène divalent,
seuls ou en mélange entre eux.

2. Émulsions selon la revendication 1, **caractérisées en ce que** sont contenues des compositions dans lesquelles la somme des indices (a) plus (b) dans la formule (1) est en moyenne statistique inférieure à 3, car par suite de réactions de transestérification une partie des groupes OR est remplacée par des groupes silylpolyéther.

3. Émulsions selon la revendication 1 ou 2, **caractérisées en ce que** R1 est un radical (poly-)-siloxane.

4. Émulsions selon la revendication 3, **caractérisées en ce qu'**on utilise comme composé contenant un radical (poly-)siloxane un polyéthersiloxane à fonction alcoxysilyle selon la formule (3) et des mélanges de tels polyéthersiloxanes, 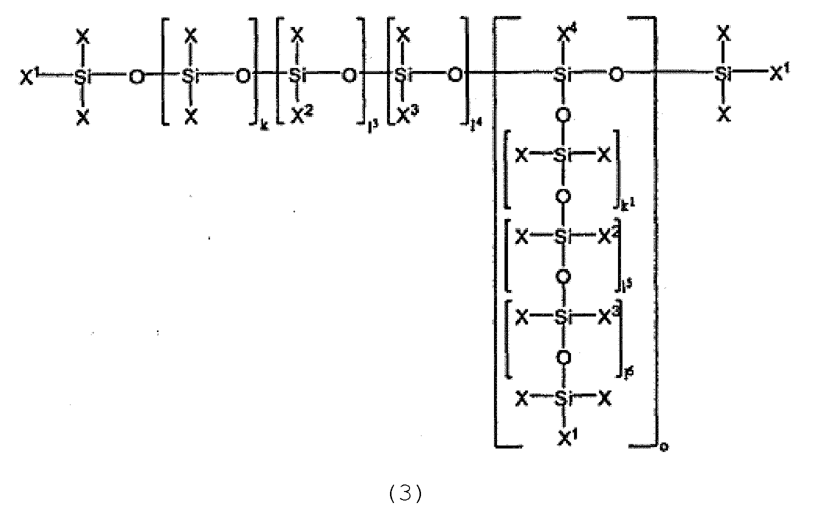 où
X est un radical hydrocarboné linéaire, cyclique ou ramifié, aliphatique ou aromatique, saturé ou insaturé, ayant de 1 à 20 atomes de carbone, qui peut contenir des hétéroatomes tels que des atomes d'oxygène, d'azote, de phosphore ou de soufre,
X¹ est au choix X, X ou X³,
X² est un radical polyoxyalkylène de formule (3a) à fonction OH, portant des groupes alcoxysilyle, qui peut être modifié par des groupes ester ou carbonate, 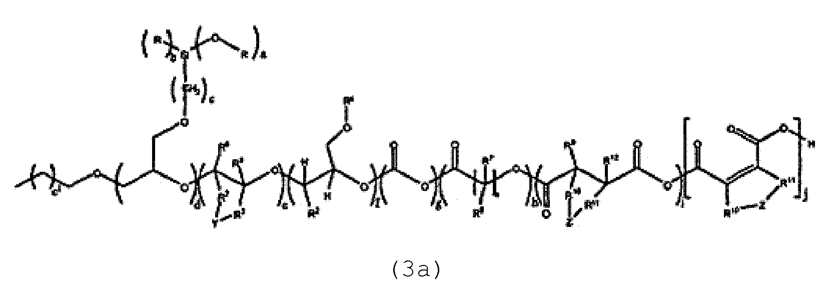
X³ est un radical polyoxyalkylène éthérifié en bout de chaîne, de formule (3b), 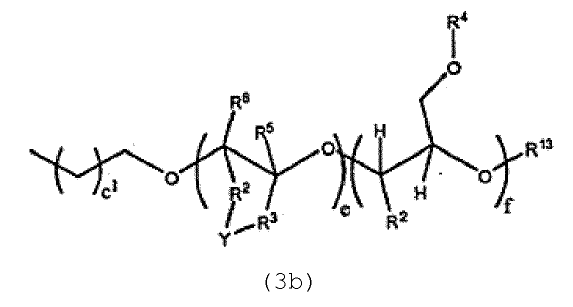
dans laquelle
R représente un ou plusieurs radicaux identiques ou différents, choisis parmi des radicaux alkyle linéaires ou ramifiés, saturés, une ou plusieurs fois insaturés, ayant de 1 à 20 atomes de carbone, ou des groupes halogénoalkyle ayant de 1 à 20 atomes de carbone,
R² ou R³, ainsi que R⁵ ou R⁶, identiques ou chacun indépendamment, représentent H ou un radical hydrocarboné saturé ou éventuellement une ou plusieurs fois insaturé, également substitué davantage, éventuellement mono- ou plurivalent, étant entendu qu'en ce qui concerne les radicaux R⁵ ou R⁶ il s'agit d'un radical hydrocarboné monovalent et le radical hydrocarboné peut être ponté en un radical cloaliphatique par le fragment Y ; Y peut ne pas être présent, ou bien être un pont méthylène comportant 1 ou 2 unités méthylène, si Y est égal à 0, R² ou R³ représentent indépendamment l'un de l'autre un radical linéaire ou ramifié ayant de 1 à 20 atomes de carbone ; les radicaux hydrocarbonés R² et R³ peuvent pour leur part être substitués davantage et porter des groupes fonctionnels tels que des atomes d'halogène, des groupes hydroxy ou des groupes glycidyloxypropyle ; R⁴ est un radical alkyle linéaire ou ramifié ayant de 1 à 18 atomes de carbone, qui peut être lié à un radical aromatique ou cycloaliphatique,
R⁷ et R⁸ représentent, indépendamment l'un de l'autre, soit un atome d'hydrogène, soit des groupes alkyle, alcoxy, aryle ou aralkyle,
R⁹, R¹⁰, R¹¹ et R¹² représentent, indépendamment les uns des autres, soit un atome d'hydrogène, soit des groupes alkyle, alcényle, alcoxy, aryle ou aralkyle, le radical hydrocarboné pouvant être ponté en un radical cycloaliphatique ou aromatique par le fragment Z, Z pouvant représenter aussi bien un radical alkylène divalent qu'un radical alcénylène divalent ;
R¹³ est au choix un groupe alkyle ayant de 1 à 18 atomes de carbone, ou un radical polyoxyalkylène estérifié en bout de chaîne par un acide carboxylique monofonctionnel, de formule (3c), 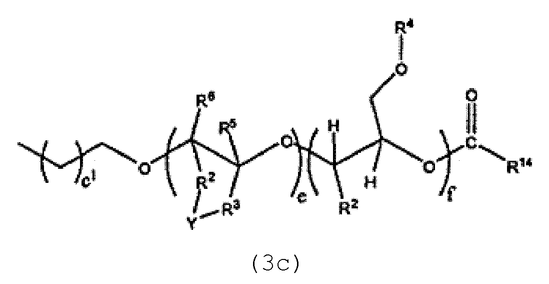
dans laquelle
R¹⁴ est un radical hydrocarboné saturé ou une ou plusieurs fois insaturé, soit linéaire, soit ramifié, aliphatique ou aromatique, ayant de 1 à 30 atomes de carbone, qui peut pour sa part porter des groupes OH, et X⁴ correspond soit à X¹, soit au fragment de formule (3d), 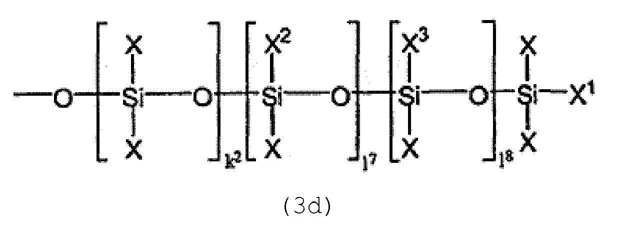
dans laquelle
k, k¹et k² représentent chacun indépendamment des nombres entiers valant de 0 à 500,
1³, 1⁴, 1⁵, 1⁶, 1⁷ et 1⁸ représentent indépendamment les uns des autres des nombres entiers valant de 0 à 60,
○ est un nombre entier valant de 0 à 10,
étant entendu que
X¹ est au moins une fois égal à X² , lorsque la somme de 1³, 1⁵ et 1⁷ est égale à zéro, et que la somme de 1³, 1⁵ et 1⁷ est égale au moins à 1 lorsque X¹ est différent de x²,
dans laquelle
a est un nombre entier valant de 1 à 3,
b est un nombre entier valant de 0 à 2, la somme de a et b est égale à 3,
c est un nombre entier valant de 0 à 22,
C¹ est un nombre entier valant de 0 à 24,
d est un nombre entier valant de 1 à 500,
e est un nombre entier valant de 0 à 5 000,
n est un nombre entier valant de 2 à 8 et
f, g, h, i et j sont respectivement des nombres entiers valant de 0 à 500,
étant entendu que les fragments avec les indices d à j sont librement permutables entre eux, remplaçables les uns par les autres dans la séquence à l'intérieur de la chaîne polyéther et les divers motifs monomères des fragments présentant les nombres d'indices d à j étant constitués séquentiellement entre eux ou bien pouvant être soumis à une distribution statistique et étant entendu que les fragments portant les indices k, k¹, k², 1³, 1⁴, 1⁵, 1⁶, 1⁷, 1⁸ et O sont librement permutables entre eux, remplaçables les uns par les autres à l'intérieur de la chaîne siloxane et peuvent se trouver au choix répartis statistiquement ou en se succédant séquentiellement.

5. Émulsions selon au moins l'une quelconque des revendications précédentes, **caractérisées en ce que** sont contenus des copolymères triséquencés polyéthersiloxane-polyéther linéaires de formule (5), dans lesquels les chaînes polyéther munies de groupes alcoxysilyle sont reliées au corps siloxane par une liaison Si-O-C, 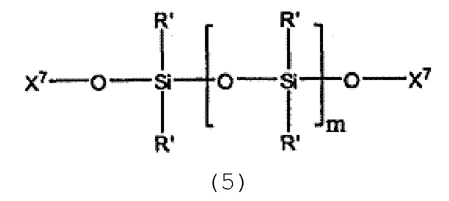 formule dans laquelle
R' correspond à un ou plusieurs radicaux alkyle identiques ou différents, linéaires ou ramifiés, saturés, une ou plusieurs fois insaturés, ayant de 1 à 20 atomes de carbone,
et
m est un nombre entier valant de 0 à 5 000, et
X⁷ correspond au fragment polyéther de formule (5a), 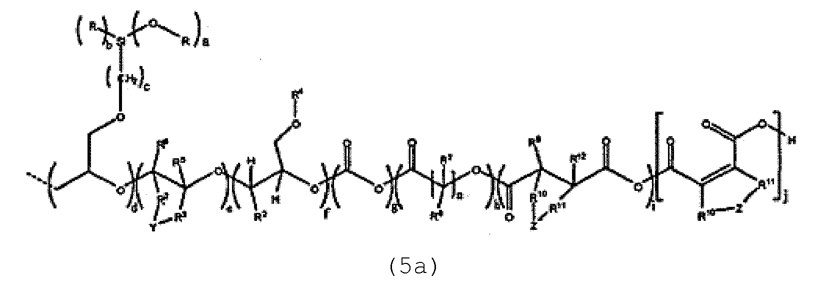
dans laquelle les substituants R, R²-R¹², les radicaux Y et Z ainsi que les indices a, b, C, d, e, f, g, h, i, j et n correspondent aux définitions indiquées précédemment pour les composés de formule (3a) et les polyéthersiloxanes décrits par la formule (3) incluent en même temps les sous-produits éventuellement contenus en raison du processus, tels que des polyéthers en excès libres ou des produits de transposition libres.

6. Émulsions selon l'une quelconque des revendications 1, 4 ou 5, **caractérisées en ce qu'**on utilise des composés de formules (1), (5) et/ou (6) seuls ou en mélange entre eux.

7. Émulsions selon au moins l'une quelconque des revendications 1 à 6, **caractérisées en ce qu'**on utilise comme émulsifiants des émulsifiants anioniques, non ioniques, cationiques et amphotères ainsi que des mélanges d'émulsifiants.

8. Émulsions selon au moins l'une quelconque des revendications 1 à 7, **caractérisées en ce que** les émulsions contiennent des composés choisis dans les groupes des catalyseurs, bases photolatentes, additifs destinés à la modification des propriétés rhéologiques, charges hydrophiles, silanes et/ou siloxanes organofonctionnels et/ou partiellement solubles et/ou insolubles dans l'eau, adjuvants, substances filmogènes, substances antimicrobiennes et conservatrices, dispersants, antimousses et désaérateurs, colorants, agents colorants et pigments, antigels, fongicides, promoteurs d'adhérence et/ou diluants réactifs, plastifiants et complexants, adjuvants de pulvérisation, agents mouillants, vitamines, substances de croissance, hormones et/ou parfums, photoprotecteurs, capteurs de radicaux, absorbeurs UV, autres stabilisants.

9. Utilisation des émulsions selon au moins l'une quelconque des revendications 1 à 8, en tant que matières premières pour peintures, encres, agents de démoulage, adhésifs, produits cosmétiques, revêtements résistants à la rayure, produits protecteurs pour le bâtiment, produits anticorrosion et/ou matières d'étanchéité, pour le couchage de papier, l'enrobage de particules, fibres textiles et de verre, pour l'enrobage de charges pour papier, pour la production de surfaces antistatiques et/ou comme produit de départ pour la fabrication de pièces en caoutchouc à base de polyoxypropylène.
